# EUROPEAN PATENT SPECIFICATION

(11) **EP 3 741 212 B1**
(45) Date of publication and mention of the grant of the patent: **13.04.2022**
(21) Application number: 18901248.7
(22) Date of filing: 25.12.2018
(51) Int. Cl.: A01K 87/04, B29C 45/00, B29C 45/14

(54) **METHOD FOR MANUFACTURING FISHING LINE GUIDE, FISHING LINE GUIDE, AND FISHING ROD INCLUDING SAME**
VERFAHREN ZUR HERSTELLUNG EINER ANGELSCHNURFÜHRUNG, ANGELSCHNURFÜHRUNG UND ANGELRUTE DAMIT
PROCÉDÉ DE FABRICATION DE GUIDE-LIGNE DE PÊCHE, ET GUIDE-LIGNE DE PÊCHE ET CANNE À PÊCHE LE COMPRENANT

(30) Priority: 17.01.2018 JP 2018005465; 28.02.2018 KR 20180024646; 09.08.2018 KR 20180093080
(43) Date of publication of application: 25.11.2020
(73) Proprietor: Fuji Kogyo Co., Ltd., Shizuoka-shi, Shizuoka 422-8564 (JP)
(72) Inventor: OMURA, Kazuhito, Shizuoka-shi, Shizuoka 422-8564 (JP)
(74) Representative: EIP
(86) International application number: PCT/JP2018/047624
(87) International publication number: WO 2019/142625

(56) References cited:
- WO-A1-2011/102398
- WO-A1-2015/178174
- GB-A- 2 260 471
- JP-A- H09 172 914
- JP-A- 2011 223 920
- JP-Y2- H 077 726

## Description

### TECHNICAL FIELD

The present disclosure relates to a method of a fishing line guide guiding a fishing line, a fishing line guide, and a fishing rod including the same.

### BACKGROUND ART

To guide a fishing line when casting a fishing rig or when landing a fish, a fishing line guide is attached to a tubular rod of a fishing rod. The fishing line guide has: a guide ring through which a fishing line passes; a frame holding and supporting the guide ring; and an attachment portion coupled to the frame and attached to a tubular rod of a fishing rod.

A movable guide or a sliding guide is used in a so-called telescopic fishing rod among fishing rods. The movable guide is fixed to an outer peripheral surface of a tubular rod of a fishing rod through interference fit. The movable guide has an annular attachment portion through which the tubular rod of the fishing rod passes. The movable guide is movable along the tubular rod in the state where the tubular rod passes through the attachment portion. The movable guide is fixed to the tubular rod through interference fit between the attachment portion and the outer peripheral surface of the tubular rod.

By way of example of the movable guide, Japanese Patent Publication No. 4275457 (patent document 1) and Japanese Utility Model Application Publication No. 1995-7726 (patent document 2) disclose a movable guide including an annular attachment portion and a metallic frame. The annular attachment portion is fitted with a tubular rod. The metallic frame has an attachment ring which supports a guide ring and is fitted with the attachment portion. WO2011102398 discloses line guides for a fishing rod having sections formed integrally using a prepreg consisting of high-strength fibers.

### PRIOR ART DOCUMENTS

### Patent Document

Patent document 1: Japanese Patent Publication No. 4275457
Patent document 2: Japanese Utility Model Application Publication No. 1995-7726

### SUMMARY OF THE INVENTION

### Problem to be solved by the Invention

To install a movable guide in a telescopic fishing rod, an annular attachment portion of the movable guide is slid toward a rear end of the fishing rod. The tubular rod of the telescopic fishing rod has a tapering shape whose diameter gradually decreases toward a tip end of the fishing rod. Thus, the attachment portion may be fixed to the outer peripheral surface of the tubular rod at a location where an inner diameter of the attachment portion is equal to an outer diameter of the tubular rod. At this time, if the attachment portion is strongly pushed toward the rear end of the fishing rod, then the attachment portion is slightly deformed and the attachment portion may be fixed with the outer peripheral surface of the tubular rod through interference fit.

When a fishing rig is cast or a fish is landed, various external forces act on the frame coupled to the attachment portion. For example, if an external force is applied to the frame in a transverse direction of the fishing rod, the frame and the attachment portion may be rotated about the tubular rod. In that event, the movable guide loses its function of guiding a fishing line. However, the movable guide, which has the annular attachment portion and the frame coupled to the attachment portion by the attachment ring, does not have a sufficient rotation prevention strength that resists the force applied to the frame in the transverse direction. Therefore, the movable guide tends to be easily rotated about the tubular rod because of an impact carelessly applied to the frame by a user or because of an impact applied to the frame by a rock or a ground surface at a fishing place. The movable guide is not designed so as to have a high rotation prevention strength resisting the rotation about the tubular rod. Further, since the metallic attachment ring protrudes from the frame in the movable guide, the movable guide does not to have a sufficient bending strength, and fails to smoothly untangle the line tangle of the fishing line that occurs in the movable guide.

The telescopic fishing rod may be used for fishing on a waterside, a seashore, a seashore rock, etc. The telescopic fishing rod for seashore rock fishing may have an overall length of 4.5m to 5.5m, and ten to fifteen movable guides may be generally attached to such a telescopic fishing rod. A lightweight fishing rod is advantageous in view of smoothly casting a fishing rig or easily landing a fish. To this end, the telescopic fishing rod requires lightweight movable guides. However, due to the metallic frame having the metallic attachment ring, the movable guide of a prior art does not cope with weight reduction.

Various embodiments according to the present disclosure provide a fishing line guide that solves at least some of the aforementioned problems of the prior art.

### Means for Solving the Problem

The invention is defined by the appended claims.

According to an embodiment, there is provided a method of manufacturing a fishing line guide. Further, according to an embodiment, there are provided a ring support formed with a reinforcing flange, and a fishing line guide in which a lower end of the ring support is embedded in an attachment portion. Further, there is provided a fishing line guide provided with a structure which can prevent a rear end of a smaller-sized attachment portion from being inserted into a front end of a larger-sized attachment portion.

According to an embodiment of the present disclosure, a method of manufacturing a fishing line guide, which has a guide ring for guiding a fishing line and is attachable to a tubular rod of a fishing rod, includes: working a ring support composed of a metallic thin plate, wherein the ring support includes: a ring holding portion holding a guide ring; and a ring supporting portion integrally formed with the ring holding portion, and wherein a through-hole is formed in the ring holding portion as a ring holding hole such that a reinforcing flange in contact with an outer peripheral surface of the guide ring is formed; and injection molding an attachment portion having an annular shape, which has an inner peripheral surface to be fitted with an outer peripheral surface of the tubular rod, from a resin material by using the ring support as an insert such that a lower portion of the ring supporting portion is embedded in the attachment portion. The working the ring support includes: forming the through-hole in a metal sheet; after the forming the through-hole, forming the reinforcing flange, with which the guide ring is fitted at an inner peripheral surface of the reinforcing flange, by making an edge portion surrounding the through-hole of the metal sheet protrude from the metal sheet; bending the metal sheet such that at least one bending portion is formed in the metal sheet; and blanking the ring support from the metal sheet.

According to an embodiment, the forming the reinforcing flange may include: aligning a burring punch on the metal sheet such that a central axis of the burring punch coincides with a central axis of the through-hole; causing a leading end of the burring punch to bend the edge portion surrounding the through-hole by moving the burring punch in a direction of the central axis; and completely perforating the through-hole by the burring punch.

According to an embodiment, the bending the metal sheet may include: bending the metal sheet so as to form a first bending portion which extends to a lower end of the ring supporting portion in a downward direction toward the tubular rod when the fishing line guide is attached to the fishing rod; and bending the metal sheet so as to form a second bending portion which is a boundary between the ring holding portion and the ring supporting portion and is convex toward a lower end of the ring support.

According to an embodiment, the working the ring support may include, before the bending the metal sheet, forming a pair of first openings, which are formed to be perforated through the ring supporting portion, in the metal sheet, and the first openings may be filled with the resin material through the injection molding the attachment portion.

According to an embodiment, the working the ring support may further include, after the forming the reinforcing flange, forming a plurality of fitting protrusions in contact with an outer peripheral surface of the guide ring by shaving the inner peripheral surface of the reinforcing flange.

According to a further embodiment of the present disclosure, a fishing line guide, which is attachable to a tubular rod of a fishing rod for guiding a fishing line, may include: an attachment portion having an annular shape composed of a hardened resin material and having an inner peripheral surface to be fitted with an outer peripheral surface of the tubular rod; a guide ring through which the fishing line can pass; and a ring support composed of a metallic thin plate and including a ring holding portion having a ring holding hole to which the guide ring is coupled, and a ring supporting portion integrally formed with the ring holding portion and partially coupled to the attachment portion. The ring support and the attachment portion may be partially coupled to each other through injection molding of the resin material formed to be the attachment portion by using the ring support as an insert such that a lower portion of the ring supporting portion is embedded in the attachment portion. The attachment portion may include: an upper rib located at an upper end of the attachment portion and protruding in a radially outward direction; and a pair of lateral ribs located below a center of the attachment portion and protruding in the radially outward direction. The ring supporting portion may be bent at a predetermined bending angle with reference to a bending portion that extends in one direction in the ring supporting portion. The ring holding portion may include a reinforcing flange that protrudes along an axial direction of the ring holding hole so as to form the ring holding hole and is in contact with an outer peripheral surface of the guide ring. The reinforcing flange may include: an inner peripheral surface; and a guide surface which has a curved shape extending from the inner peripheral surface and guides the outer peripheral surface of the guide ring such that the outer peripheral surface of the guide ring is in contact with the inner peripheral surface. An adhesive may be applied to a predetermined space between the guide surface of the reinforcing flange and the outer peripheral surface of the guide ring along a circumferential direction of the guide ring.

According to an embodiment, a plurality of fitting protrusions in contact with the outer peripheral surface of the guide ring may be formed in the inner peripheral surface of the reinforcing flange.

According to an embodiment, the upper rib and the pair of lateral ribs may extend to a rear end surface of the attachment portion in a rearward direction toward a butt of the fishing rod when the fishing line guide is attached to the fishing rod, and the rear end surface of the attachment portion may include a rear end surface of the upper rib and rear end surfaces of the pair of lateral ribs.

According to an embodiment, the rear end surface of the upper rib and the rear end surfaces of the pair of lateral ribs is contactable with a front end surface of an attachment portion of another fishing line guide attached to the tubular rod when the fishing line guide is attached to the fishing rod.

A fishing rod according to another embodiment of the present disclosure may include: a plurality of tubular rods; and the fishing line guide which is attached to one of the tubular rods.

### Effect of the Invention

According to various embodiments of the present disclosure, since the reinforcing flange is formed in the ring holding portion, a coupling property between the guide ring and the ring holding portion can be improved. Further, since the reinforcing flange is formed through a burring process and a shaving process to have the guide surface, the guide ring can be prevented from cracking when the guide ring is inserted into the ring holding hole. Further, since the upper rib and the lateral ribs extending to the rear end surface of the attachment portion are formed in the attachment portion, the rear end of the smaller-sized attachment portion can be prevented from being inserted into the front end of the larger-sized attachment portion.

### BRIEF DESCRIPTION OF THE DRAWINGS

FIG. 1 shows an example of a telescopic fishing rod in which a fishing line guide according to an embodiments of the present disclosure are installed.
FIG. 2A shows a fishing line guide according to an embodiments of the present disclosure.
FIG. 2B shows a fishing line guide according to an embodiments of the present disclosure.
FIG. 2C shows a fishing line guide according to an embodiments of the present disclosure.
FIG. 3 is a sectional view of the fishing line guide shown in FIG. 2A which is taken along the direction I-I.
FIG. 4A shows a ring support of a fishing line guide according to an embodiment of the present disclosure.
FIG. 4B shows a ring support of a fishing line guide according to an embodiment of the present disclosure.
FIG. 4C shows a ring support of a fishing line guide according to an embodiment of the present disclosure.
FIG. 4D shows a ring support of a fishing line guide according to an embodiment of the present disclosure.
FIG. 5 is a flowchart showing a method of manufacturing a fishing line guide according to an embodiment of the present disclosure.
FIG. 6 is a flowchart showing a step of working a ring support in the method of manufacturing a fishing line guide shown in FIG. 5.
FIG. 7 is a flowchart showing a step of forming a reinforcing flange in the method of manufacturing a fishing line guide shown in FIG. 5.
FIG. 8A illustrates a process of manufacturing a ring support according to an embodiment of the present disclosure.
FIG. 8B illustrates a process of manufacturing a ring support according to an embodiment of the present disclosure.
FIG. 8C illustrates a process of manufacturing a ring support according to an embodiment of the present disclosure.
FIG. 8D illustrates a process of manufacturing a ring support according to an embodiment of the present disclosure.
FIG. 8E illustrates a process of manufacturing a ring support according to an embodiment of the present disclosure.
FIG. 8F illustrates a process of manufacturing a ring support according to an embodiment of the present disclosure.
FIG. 9 illustrates a process of manufacturing a ring support according to a comparative example.
FIG. 10 illustrates a ring support according to an embodiment of the present disclosure and a ring support according to a comparative example.
FIG. 11 is a perspective view showing a portion of a molding die which is used in a process of manufacturing a fishing line guide according to an embodiment of the present disclosure.
FIG. 12 illustrates a method of forming a reinforcing flange according to a comparative example and a method of forming a reinforcing flange according to an embodiment of the present disclosure.
FIG. 13 is a table for comparing a ring holding portion according to a comparative example and a ring holding portion according to an embodiment of the present disclosure.
FIG. 14 illustrates a process of inserting a guide ring into a ring holding portion according to a comparative example and a process of inserting a guide ring into a ring holding portion according to an embodiment of the present disclosure.
FIG. 15 illustrates the state where a guide ring is inserted to a ring holding portion according to a comparative example and the state where a guide ring is inserted to a ring holding portion according to an embodiment of the present disclosure.
FIG. 16 illustrates a fishing line guide according to a comparative example.
FIG. 17 illustrates a fishing line guide including an attachment portion provided with a plurality of ribs according to an embodiment of the present disclosure.

### MODES FOR CARRYING OUT THE INVENTION

Embodiments of the present disclosure are illustrated for the purpose of explaining the technical idea of the present disclosure. The scope of the rights according to the present disclosure is not limited to the embodiments presented below or the detailed descriptions of such embodiments.

All the technical terms and scientific terms in the present disclosure include meanings or definitions that are commonly understood by those of ordinary skill in the art unless otherwise defined. All terms in the present disclosure are selected for the purpose of describing the present disclosure more clearly, and are not selected to limit the scope of the present disclosure.

As used in the present disclosure, expressions such as "comprising", "including", "having", and the like are to be understood as open-ended terms having the possibility of encompassing other embodiments, unless otherwise mentioned in the phrase or sentence containing such expressions.

The singular expressions that are described in the present disclosure may have a plural meaning unless otherwise stated, which will be also applied to the singular expressions recited in the claims.

The expressions, such as "first," "second," etc., which are used in the present disclosure, are used to separate a plurality of elements, and are not intended to limit an order or importance of the elements.

In the present disclosure, the description that one element is "connected," or "coupled" to another element should be understood to indicate that one element may be directly connected, or coupled, to another element, or that one element may be connected, or coupled, to another element via a new element.

The dimensional and numerical values described in the present disclosure are not limited only to the dimensional and numerical values that are described here. Unless specified otherwise, the dimensional and numerical values may be understood to mean the described values and the equivalent ranges including the values. For example, the dimension of "7mm" described in the present disclosure may be understood to include "about 7mm".

The direction indication term "upward, " "upper" or the like used in the present disclosure is based on a direction in which a ring support is positioned with respect to an attachment portion in the accompanying drawings, while the direction indication term "downward," "lower" or the like means a direction opposite to the upward or upper direction. The fishing line guide shown in the accompanying drawings may be oriented differently, and the direction indication terms may be construed accordingly.

In the coordinate system shown in the drawings of the present disclosure, "TD" denotes a frontward direction and "BD" denotes a rearward direction. Further, "UD" denotes an upward direction and "LD" denotes a downward direction. Further, "WD" denotes a width direction.

Descriptions are made hereinafter as to the embodiments of the present disclosure with reference to the accompanying drawings. Like reference symbols in the accompanying drawings denote like or corresponding elements. Further, in the following descriptions on the embodiments, duplicate descriptions for the same or corresponding elements may be omitted. However, even if the descriptions of the elements are omitted, such elements are not intended to be excluded in any embodiment.

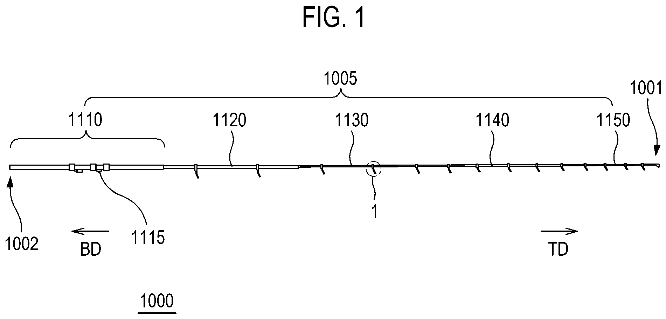

FIG. 1 shows an example of a telescopic fishing rod 1000 in which fishing line guide 1 according to various embodiments of the present disclosure are installed.

An arrow TD indicates a frontward direction toward a tip 1001 of the fishing rod, and an arrow BD indicates a rearward direction toward a butt 1002 of the fishing rod. The fishing rod 1000 shown in FIG. 1 may be referred to as a telescopic fishing rod in the art. The fishing rod 1000 may be used for fishing on a waterside, a seashore, a boat, a seashore rock, or the like, but the places where the fishing rod 1000 may be used are not limited to the aforementioned places.

The fishing rod 1000 includes a long cylindrical rod body 1005. The rod body 1005 may serve as a structure which resists various external forces acting on the fishing rod 1000 and maintains the shape of the fishing rod 1000. The rod body 1005 may include first to fifth tubular rods 1110, 1120, 1130, 1140, 1150. Further, a plurality of tubular rods are coupled to one another in such a telescopic manner that one tubular rod is fitted into another tubular rod located next to said one tubular rod and having an outer diameter greater than that of said one tubular rod, thereby constituting the rod body 1005. FIG. 1 shows the extended rod body 1005 of fishing rod 1000.

The first tubular rod 1110, which is located at a rear end of the fishing rod 1000 among the tubular rods of the rod body 1005, serves as a base rod which a user can grip. A reel seat 1115 is attached to the first tubular rod 1110, and a reel (not shown) for reeling out or winding a fishing line (not shown) may be detachably attached to the reel seat 1115.

The fishing rod 1000 may include a plurality of fishing line guides that are installed to the second to fifth tubular rods 1120, 1130, 1140, 1150. The fishing line guides guide a fishing line which is reeled out from the reel when a fishing rig is cast, or which is wound around the reel when a fish is landed. The fishing line guide according to any one of the disclosed embodiments may be used as the plurality of fishing line guides. A fishing line guide 1 according to an embodiment of the present disclosure may be attached to one of the second to fifth tubular rods 1120, 1130, 1140, 1150 of the rod body 1005.

For example, the third tubular rod 1130 of the rod body 1005 passes through an annular attachment portion of the fishing line guide 1, and therefore the fishing line guide 1 is attached to the rod body 1005. Before the fishing line guide 1 is attached to the rod body 1005, the fishing line guide 1 can be slid in the frontward direction TD or in the rearward direction BD along the rod body 1005 at the attachment portion thereof, and can be rotated about the rod body 1005. The third tubular rod 1130 of the rod body 1005 has a tapering shape whose outer diameter gradually decreases in the frontward direction TD. Accordingly, as the fishing line guide 1 is moved in the rearward direction BD, the attachment portion of the fishing line guide 1 is coupled to an outer peripheral surface of the third tubular rod 1130 through interference fit, and thus the fishing line guide 1 may be attached to the rod body 1005. The fishing line guide according to the embodiments may be referred to as a "movable guide" or a "sliding guide" in the art.

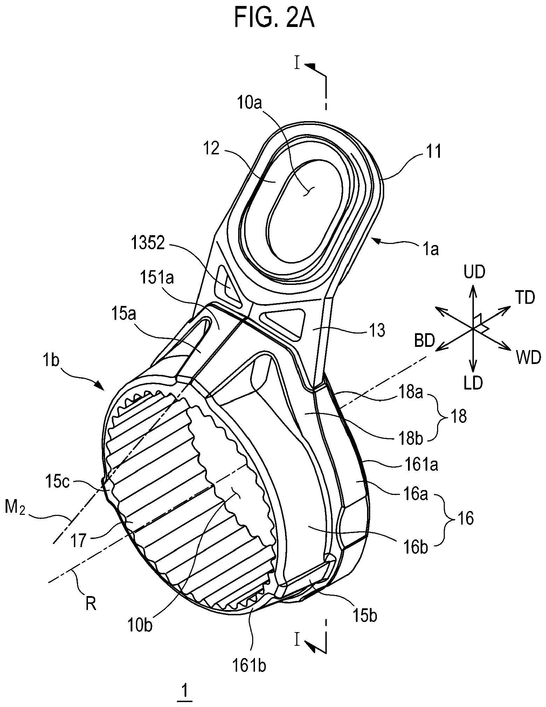

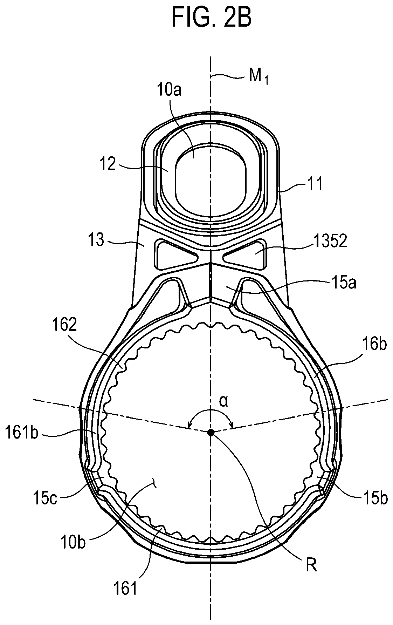

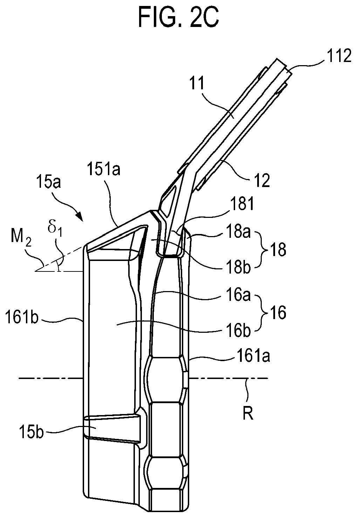

FIGS. 2A to 2C show the fishing line guide 1 according to the first embodiment of the present disclosure in various directions. FIG. 2A is a perspective view of the fishing line guide 1, FIG. 2B is a front view of the fishing line guide 1, and FIG. 2C is a side view of the fishing line guide 1.

The fishing line guide 1 may include a ring support 1a and an attachment portion 1b coupled to the ring support 1a. The ring support 1a may include a ring holding portion 11 in which a ring holding hole 10a is formed, and a ring supporting portion 13 formed to extend from the ring holding portion 11 downwards. A guide ring 12 may be inserted to and fixed to the ring holding hole 10a. The attachment portion 1b may be formed so as to surround the ring supporting portion 13 by being insert injection molded from carbon long fiber reinforced resin by using the ring support 1a as an insert. The attachment portion 1b may be installed to be movable along an outer periphery of the fishing rod 1000 shown in FIG. 1.

The attachment portion 1b has an annular shape, and, for example, the third tubular rod 1130 among the tubular rods of the rod body 1005 can pass through the attachment portion 1b. The attachment portion 1b comprises an annular body 16 through which the third tubular rod 1130 can pass. A cylindrical bore 10B, to which the outer peripheral surface of the third tubular rod 1130 is fitted, is perforated through the annular body 16 along a central axis R of the fishing rod. A diameter of the bore 10B may be constant in the frontward direction TD or in the rearward direction BD. For example, in the state where the third tubular rod 1130 passes through the bore 10B, the attachment portion 1b can be slid along the third tubular rod 1130 and can be rotated about the third tubular rod 1130.

Referring to FIG. 1, the third tubular rod 1130 has a tapering shape that becomes gradually thinner in the frontward direction TD. Accordingly, while the annular body 16 is moved in the rearward direction BD, the annular body 16 can be fitted with the outer peripheral surface of the third tubular rod 1130 at a location where the outer diameter of the third tubular rod 1130 and the diameter of the bore 10B are approximately equal to each other. Then, if the annular body 16 is moved further in the rearward direction BD, the annular body 16 is slightly deformed and, at the same time, the attachment portion 1b can be firmly fitted with and fixed to the third tubular rod 1130.

A plurality of serrations 17, which extend in an axial direction of the bore 10B and protrude toward a central axis R, may be formed in an inner peripheral surface of the annular body 16. Pointed tips may be formed at ends of the plurality of serrations 17. That is, the plurality of serrations 17 may have a triangular cross-section. When the attachment portion 1b is fitted with the rod body 1005 with a fitting load equal to or greater than a predetermined intensity, the tips of the plurality of serrations 17 may bite an outer peripheral surface of the rod body 1005, thus reinforcing a fixing force between the rod body 1005 and the annular body 16.

The ring holding hole 10a is perforated through the ring holding portion 11 in a thickness direction of the ring holding portion 11 (i.e., in a sectional direction). The ring holding hole 10a may have an elliptical inner peripheral surface in order to correspond to an outer peripheral surface of the guide ring 12. By way of another example, the ring holding hole 10a may have a circular shape. The guide ring 12 may be composed of a ceramic material so as to prevent wear caused by the fishing line. The guide ring 12 is fitted, at the outer peripheral surface thereof, to the inner peripheral surface of the ring holding portion 11 surrounding the ring holding hole 10a, and may be coupled to the inner peripheral surface of the ring holding portion 11 through point contact or surface contact. Further, an adhesive for bonding the inner peripheral surface of the ring holding portion 11 and the outer peripheral surface of the guide ring 12 may be applied between the inner peripheral surface of the ring holding portion and the outer peripheral surface of the guide ring. The ring holding portion 11 has an approximately annular shape so as to hold the guide ring 12 along the whole circumference of the guide ring 12 by the ring holding hole 10a.

The annular body 16 has a large outer diameter portion 16a and a small outer diameter portion 16b. The large outer diameter portion is located in the frontward direction TD and has a relatively large outer diameter. The small outer diameter portion has an outer diameter smaller than that of the large outer diameter portion 16a and connects with the large outer diameter portion 16a. A radial thickness of the annular body 16 at the large outer diameter portion 16a is greater than a radial thickness of the annular body 16 at the small outer diameter portion 16b. A surface of the large outer diameter portion 16a in the frontward direction TD may define an annular front end surface 161a of the attachment portion 1b, and a surface of the small outer diameter portion 16b in the rearward direction BD may define an annular rear end surface 161b of the attachment portion 1b.

The attachment portion 1b may include a coupling portion 18 that is coupled to the ring support 1a. The coupling portion 18 may be formed at an upper outer peripheral portion of the large outer diameter portion 16a. The coupling portion 18 may include a front coupling portion 18a and a rear coupling portion 18b. A coupling opening 181, into which a lower end of the ring support 1a is inserted, may be formed in the coupling portion 18.

First to third ribs 15a, 15b, 15c may be formed on an outer peripheral surface of the annular body 16. The first rib 15a may be described as an upper rib, and the second and third ribs 15b, 15c may be described as a pair of lateral ribs. The first rib 15a may be formed between an outer end of the rear coupling portion 18b and the rear end surface 161b of the small outer diameter portion 16b. The pair of second and third ribs 15b, 15c may be formed on opposed lateral sides of a lower portion of the small outer diameter portion 16b. Referring to FIG. 2B, the first to third ribs 15a, 15b, 15c may form an approximately triangular shape in the frontward direction.

The first rib 15a may be located adjacent to the ring supporting portion 13 and may be located at an upper end of the annular body 16. The first rib 15a is formed throughout the rear coupling portion 18b and the small outer diameter portion 16b. An outer peripheral surface 151a of the first rib 15a is inclined toward the central axis R. The first rib 15a may have a shape that tapers in the rearward direction BD toward the butt of the fishing rod. Therefore, the first rib 15a may have a width that gradually widens from the rear end surface 161b in the rearward direction BD along the frontward direction TD facing the tip of the fishing rod. Referring to FIG. 2C, a longitudinal central line M2 included in the outer peripheral surface 151a of the first rib 15a may form a predetermined angle δ1 with the central axis R of the fishing rod. The predetermined angle δ1 may be approximately between 20 degrees and 50 degrees.

The pair of second and third ribs 15b, 15c are located below the center of the annular body 16 at lateral ends of the annular body 16. The pair of second and third ribs 15b, 15c are formed throughout the large outer diameter portion 16a and the small outer diameter portion 16b. Widths of the pair of second and third ribs 15b, 15c are narrower than the width of the first rib 15a. Angles between the first rib 15a and the pair of second and third ribs 15b, 15c with respect to the central axis R may be, but is not limited to, about 120 degrees.

The first rib 15a and the pair of second and third ribs 15b, 15c may extend up to the rear end surface 161b of the attachment portion 1b in the rearward direction toward a butt of the fishing rod. Therefore, the rear end surface 161b of the attachment portion 1b may include a rear end surface of the first rib 15a and rear end surfaces of the second and third ribs 15b, 15c. That is, the rear end surface 161b of the attachment portion 1b and the rear end surfaces of the first to third ribs 15a, 15b, 15c may be disposed on a single integral plane.

Referring to FIG. 2B, the small outer diameter portion 16b may include a lower attachment portion 161 and an upper attachment portion 162. The lower attachment portion 161 has a constant radial thickness along a circumferential direction of the small outer diameter portion. The upper attachment portion 162 is configured such that a radial thickness thereof increases from both leading ends of the lower attachment portion 161 along the circumferential direction. The upper attachment portion 162 may be located at an upper side with reference to the central axis R, and the lower attachment portion 161 may be located at a lower side with reference to the central axis R. The upper attachment portion 162 may be formed so as to connect with the first rib 15a, and the lower attachment portion 161 may be formed so as to connect with the pair of second and third ribs 15b, 15c

The upper attachment portion 162 may have such a shape that the radial thickness becomes gradually thicker from the both leading ends of the lower attachment portion 161 toward the first rib 15a. That is, the radial thickness of a portion of the upper attachment portion 162, which connects with the first rib 15a, may be the largest. An angle α between lines connecting the central axis R and the both leading ends of the lower attachment portion 161 may be equal to or less than 170 degrees. During the insert injection molding, the upper attachment portion 162 reduces the flow velocity of injection material moving toward the central line M1 and promotes the inflow of a reversing flow, thereby suppressing formation of a weld line.

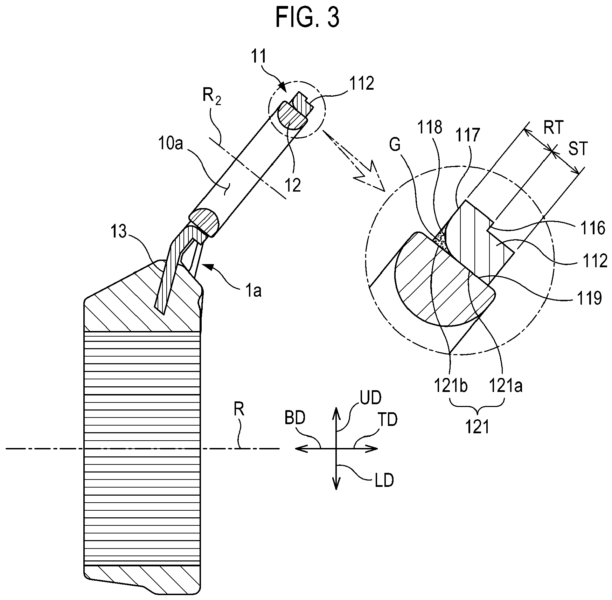

FIG. 3 is a sectional view of the fishing line guide 1 shown in FIG. 2A which is taken along the direction I-I.

The ring support 1a may include, in the ring holding portion 11, a reinforcing flange 112 as a structure for improving the strength. The reinforcing flange 112 may have an oblong shape so as to correspond to the outer shape of the guide ring 12. The reinforcing flange 112 may protrude from the ring holding portion 11 in an oblique direction between the frontward direction TD and the downward direction LD. For example, the reinforcing flange 112 may be formed to protrude a front end surface 116 of the ring holding portion 11 in the direction of a central axis R₂ of the ring holding hole. For example, the reinforcing flange 112 may protrude from the ring holding portion 11 such that a protruding length ST of an inner peripheral surface 119 is smaller than a thickness RT of the ring holding portion 11.

The reinforcing flange 112 defines the ring holding hole 10a at the inner peripheral surface 119 thereof. The ring holding portion 11 may include a guide surface 118 which is formed between a rear end surface 117 located opposite the front end surface 116 and the inner peripheral surface 119 of the reinforcing flange 112 and has a curved shape. The inner peripheral surface 119 extends in an annular shape, and the guide ring 12 may be fitted to the inner peripheral surface 119. The guide surface 118 connects with the inner peripheral surface 119. The guide surface 118 extends in an annular shape along the inner peripheral surface 119. The guide surface 118 is curved with respect to the inner peripheral surface 119, and is formed as a curved surface. That is, a diameter of the guide surface 118 gradually decreases from the rear end surface 117 toward the inner peripheral surface 119.

The guide ring 12 is in contact with the inner peripheral surface 119 of the reinforcing flange 112 while being moved in the axial direction R₂ of the ring holding hole 10a, and then may be fitted to the ring holding hole. When the guide ring 12 is fitted to the reinforcing flange 112, the guide ring 12 can be fitted from the guide surface 118 to the inner peripheral surface 119. That is, the outer peripheral surface of the guide ring 12 can be fitted to the inner peripheral surface 119 along the guide surface 118. Therefore, when the guide ring 12 is fitted to the ring holding portion 11, cracks on the outer peripheral surface of the guide ring 12 can be prevented.

The outer peripheral surface 121 of the guide ring 12 may include a first outer peripheral surface 121a in contact with the inner peripheral surface 119 of the reinforcing flange 112, and a second outer peripheral surface 121b forming a predetermined space with the guide surface 118. An adhesive G may be applied to the predetermined space along a circumferential direction of the guide ring 12. Therefore, a strong bonding strength may be achieved between the guide ring 12 and the reinforcing flange 112.

The bending strength of the ring support 1a is improved by the reinforcing flange 112 formed in the ring holding portion 11. The reinforcing flange 112 may be formed by forming a through-hole, which corresponds to the shape of the ring holding hole 10a, in the metal sheet for forming the ring support 1a and then making an edge portion surrounding the through-hole protrude from the metal sheet through a burring process. A detailed description on the burring process is made below.

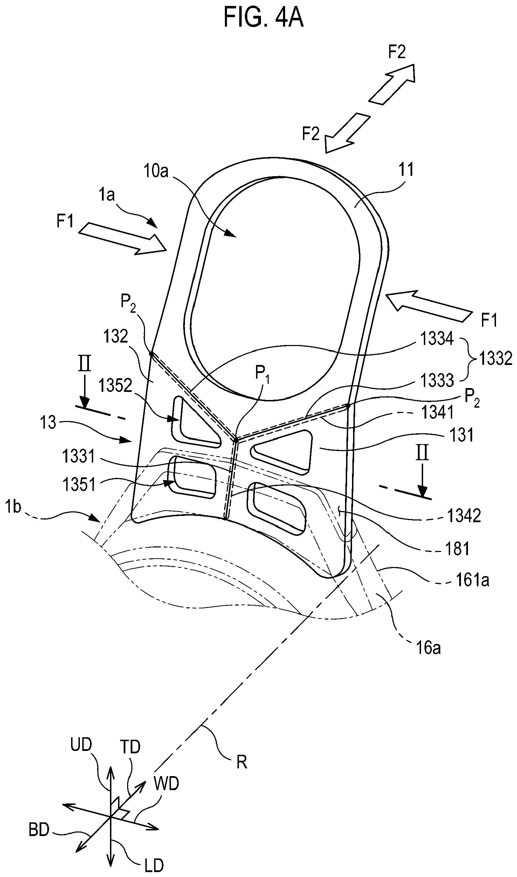

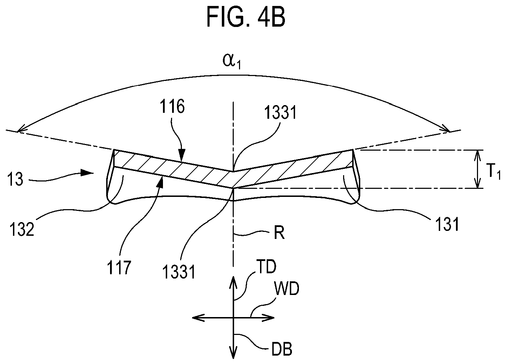

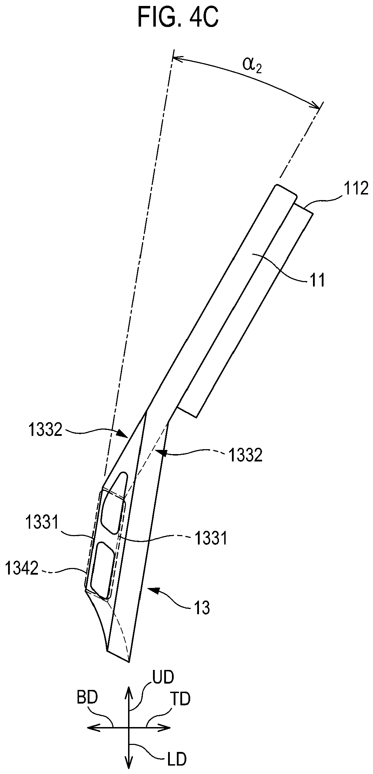

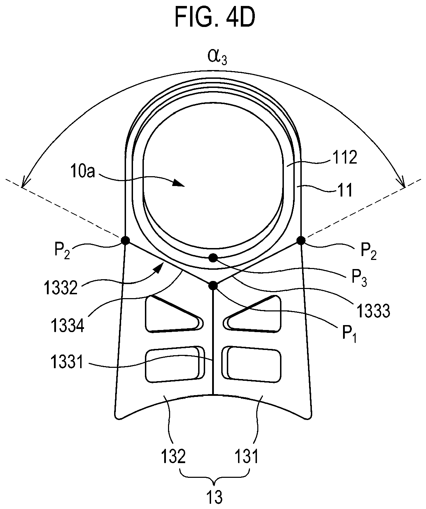

FIGS. 4A to 4D show the ring support 1a of the fishing line guide 1 according to an embodiment of the present disclosure in various directions. FIG. 4A is a perspective view of the ring support 1a, FIG. 4B is a sectional view of the ring support 1a shown in FIG. 4A, which is taken along the direction II-II, FIG. 4C is a side view of the ring support 1a, and FIG. 4D is a rear view of the ring support 1a.

The ring support 1a may hold the guide ring 12 and may support the guide ring 12 with respect to the attachment portion 1b. The ring support 1a may be composed of a thin plate that is made from a metallic material such as stainless steel, stainless alloy, titanium alloy, pure titanium, etc. The ring support 1a is formed as the thin plate in which portions constituting the ring support 1a are bent or curved with respect to one another by a bending portion formed in the ring support. Further, the ring support 1a may be formed by press working (for example, by punching, blanking, or bending) a thin metal sheet that is made of one of the aforementioned metallic materials (such a metal sheet may be referred to as a black in the art).

The ring support 1a may have a pair of first openings 1351 that are formed in a right half portion 131 and a left half portion 132 of the ring supporting portion 13 respectively. The first openings 1351 are formed to be perforated through the ring supporting portion 13 in the thickness direction along the central axis R of the fishing rod, and are formed to be symmetrical with respect to the first bending portion 1331. During the above-described insert injection molding, the resin material composing the attachment portion 1b flows into the first openings 1351 and is hardened in the first openings 1351. That is, the first openings 1351 may be filled with the hardened resin material of the attachment portion 1b. Therefore, the coupling structure between the attachment portion 1b and the ring support 1a is reinforced and the strength of the fishing line guide 1 is improved. Further, the ring support 1a is prevented from being rotated with respect to the coupling portion 18 of the attachment portion 1b or being separated from the coupling portion 18.

The ring support 1a may have second openings 1352 that are formed in the right half portion 131 and the left half portion 132 of the ring supporting portion 13 respectively. The second openings 1352 are formed to be perforated through the ring supporting portion 13 in the direction of the central axis R of the fishing rod (in the thickness direction). The second openings 1352 are formed symmetrically with respect to a first bending portion 1331, and have an approximately triangular shape. Due to the second openings 1352, the fishing line guide 1 can become more lightweight. The second openings 1352 are located in the ring supporting portion 13 outside the coupling portion 18 of the attachment portion 1b (in an upward direction UD). The second openings 1352 are formed not to overlap with an upper contour line of the coupling portion 18, thus achieving the weight reduction of the ring supporting portion 13 in the state where the coupling strength between the attachment portion 1b and the ring supporting portion 13 is maintained.

The ring support 1a may have the first bending portion 1331 that is formed in the ring supporting portion 13. The first bending portion 1331 is positioned at a center or approximately the center of the ring supporting portion 13 in the width direction WD. The ring supporting portion 13 may be bent with reference to the first bending portion 1331 in a direction toward the tip of the fishing rod (e.g., the frontward direction TD) or in a direction toward the butt of the fishing rod (e.g., the rearward direction BD).

The first bending portion 1331 extends to a lower end of the ring supporting portion 13 in the downward direction LD toward the central axis R of the fishing rod (or, in the downward direction toward the tubular rod to which the fishing line guide is attached) in the ring support 1a. Further, the first bending portion 1331 extends from the central axis R of the fishing rod approximately in the upward direction UD and meets the center of the second bending portion 1332.

The ring support 1a may have the second bending portion 1332 that is a boundary between the ring holding portion 11 and the ring supporting portion 13. The second bending portion 1332 is connected to the first bending portion 1331 approximately at a center thereof. The ring holding portion 11 may be bent with respect to the ring supporting portion 13 with reference to the second bending portion 1332 in a direction toward the tip of the fishing rod (e.g., the frontward direction TD) or in a direction toward the butt of the fishing rod (e.g., the rearward direction BD). Referring to FIG. 4A, the ring holding portion 11 is bent with reference to the second bending portion 1332 in the direction toward the tip of the fishing rod (e.g., the frontward direction TD).

The first bending portion 1331 and the second bending portion 1332 may include portions that are curved at a certain curvature in the metallic thin plate composing the ring support 1a. To provide the ring support 1a with strength-reinforced structure using the bent shape, the first bending portion 1331 and the second bending portion 1332 may have various widths. On the front end surface 116 and the rear end surface 117 of the ring support 1a, the first bending portion 1331 and the second bending portion 1332 may appear as one of the following shapes: a thin line, a narrow surface, a narrow curved surface, and a relatively wide curved surface. When the longitudinal section of the ring support 1a is taken, the first bending portion 1331 and the second bending portion 1332 may appear as a circular arc shape that is convex in the rearward direction BD on the front end surface 116 and the rear end surface 117 of the ring support 1a. Referring to FIGS. 4A and 4D, the second bending portion 1332 includes a pair of linear bending portions 1333, 1334 that extend from a connection point between the first bending portion 1331 and the second bending portion 1332 (a center point Pi of the second bending portion 1332 shown in FIG. 4A) at an obtuse angle with respect to the first bending portion 1331.

The ring support 1a has the second bending portion 1332 which is a boundary between the ring holding portion 11 and the ring supporting portion 13 and through which the ring holding portion 11 is bent. The second bending portion 1332 extends from one lateral end of the ring support 1a to an opposite lateral end of the ring support 1a, and is convex toward the lower end of the ring support 1a (the lower end of the ring supporting portion 13). The ring holding portion 11 and the ring supporting portion 13 have a common edge. Therefore, in the ring support 1a, both the lower end edge of the ring holding portion 11 and the upper end edge of the ring supporting portion 13 form the second bending portion 1332. In an embodiment, the second bending portion 1332 has a V shape convex in the downward direction LD, and is connected to the upper end of the first bending portion 1331. Further, when the ring support 1a is viewed from a lateral side, the second bending portion 1332 is inclined in an oblique direction between the frontward direction TD and the upward direction UD In some embodiment, the second bending portion 1332 may have a circular arc shape that is convex in the downward direction LD.

The first bending portion 1331 and the second bending portion 1332, which meet each other, form a Y shape, therefore forming a Y-shaped bending portion in the ring support 1a. Accordingly, the ring support 1a may be formed by press-working the above-described metal sheet (blank) along the first bending portion 1331 and the second bending portion 1332. Referring to FIGS. 4B and 4C, the ring support may be formed through bending working the metal sheet (blank), that is, forming the first and second bending portions 1331, 1332 in the metal sheet, then bending the ring supporting portion 13 at a first bending angle α1 with reference to the first bending portion 1331, and thereafter bending the ring holding portion 11 at a second bending angle α2 with reference to the second bending portion 1332.

The ring support 1a may be formed as a metallic thin plate in which the ring holding portion 11, the right half portion 131 of the ring supporting portion 13 and the left half portion 132 of the ring supporting portion 13 are bent toward one another. Further, in such a metallic thin plate, the ring holding portion 11, the right half portion 131 of the ring supporting portion 13, and the left half portion 132 of the ring supporting portion 13 are integrally formed via the first and second bending portions 1331 and 1332 that make the Y-shaped bending portion. And, in such a metallic thin plate, the ring holding portion, the right half portion of the ring supporting portion, and the left half portion of the ring supporting portion are bent toward one another by the first and second bending portions 1331, 1332.

The above-described press-working for the metal sheet may be performed until the metal material composing the metal sheet is work-hardened. Therefore, referring to FIG. 4A, the ring support 1a may include work-hardened portions 1341, 1342 which said metal material creates by being work-hardened by said press-working. The work-hardened portions 1341, 1342 have a shape corresponding to the Y shape of the first and second bending portions 1331, 1332. The work-hardened portions 1341, 1342 are formed within the ring support 1a along the first bending portion 1331 and the second bending portion 1332. The work-hardened portions 1341, 1342 have a yield point higher than that of the ring holding portion 11 and the ring supporting portion 13 of the ring support 1a. Thus, it is difficult for the ring support 1a to be plastically deformed at the first and second bending portions 1331, 1332 at which the work-hardened portions 1341, 1342 are created. Accordingly, due to the Y-shaped bending portion made by the first and second bending portions 1331, 1332, the ring support 1a has a strong resistance against external forces applied to the ring support 1a, and the strength of the ring support 1a can be reinforced.

Referring to FIG. 4B, the ring supporting portion 13 is bent with reference to the first bending portion 1331 at the first bending angle α1 in the frontward direction TD. The first bending angle α1 may be an obtuse angle of 120 degrees to 170 degrees. When the first bending angle α1 is an obtuse angle, a crosswind-receiving area of the ring supporting portion 13 can be decreased, and the bending of the fishing rod, which is caused due to a strong crosswind drag force, can be reduced. When the first bending angle α1 is 120 degrees or more, the influence of a crosswind drag force on the ring supporting portion 13 can be effectively reduced in the event of a strong crosswind. Further, the area of the ring holding portion 11, which is bent with respect to the ring supporting portion 13, can be sufficiently secured in a simple shape. In case where the first bending angle α1 exceeds 170 degrees, the work-hardening caused by compression may not occur during bending the ring supporting portion 13 with reference to the first bending portion 1331. In such a case, if an external force, which rotates the ring support 1a about the tubular rod of the fishing rod, acts on the ring support 1a, the bent ring supporting portion 13 tends to deform into a straight line shape in a vector direction of the external force, and therefore the ring support 1a may be separated from the attachment portion 1b.

Referring to FIG. 4B, a distance T₁ (the thickness of the bent ring supporting portion) between a front end of the ring supporting portion 13 (a lateral end edge of the ring supporting portion 13) and a rear end of the ring supporting portion 13 (the first bending portion 1331 on the rear end surface 117) may be 0.5mm to 3mm along the central axis R. The attachment portion composed of a resin material tends to elastically deform, and may bend or deform because of little stress. In case where the distance T₁ is less than 0.5mm, when an external force is applied to the ring support 1a in a direction of rotating the ring support 1a about the central axis R of the fishing rod *(see* arrows F1 in FIG. 4A), the coupling opening 181 is pushed by the ring supporting portion 13 and the surface of the coupling opening 181 may be deformed. Then, a necessary reaction force does not act on the ring support 1a, and therefore the ring supporting portion 13 may climb over the coupling opening 181 and then be moved therefrom. In case where the distance T₁ exceeds 3mm, the ring support 1a may become excessively bigger, and the weight reduction of the fishing line guide cannot be achieved. Further, a portion of the ring supporting portion 13, which protrudes from the attachment portion 1b, may be severely influenced by a crosswind, thereby significantly deteriorating a heavy holding feeling of the fishing rod.

Referring to FIG. 4C, the ring holding portion 11 is bent with respect to the ring supporting portion 13 with reference to the second bending portion 1332 at the second bending angle α2 in the frontward direction TD. The ring holding portion 11 is inclined with respect to the ring supporting portion 13 at the second bending angle α2 toward the tip of the fishing rod (in the frontward direction TD). The second bending angle α2 may be, for example, 15 degrees to 20 degrees in order to improve the bending strength of the ring support 1a and smoothly untangle a line tangle.

By a user or an external impact, an external force F1 *(see* FIG. 4A), which rotates the ring support 1a about the third tubular rod 1130 *(see* FIG. 1) (about the central axis R of the fishing rod), may be repeatedly applied to the ring support 1a. However, due to the Y-shaped bending portion of the ring support 1a, the ring support 1a has an improved rotation prevention strength that resists the external force F1 applied to the third tubular rod 1130 in a transverse direction.

Referring to FIGS. 4B and 4C, the right half portion 131 and the left half portion 132 of the ring supporting portion 13 are located obliquely at an acute angle with respect to the central axis R with reference to the first bending portion 1331 and face toward each other. The ring holding portion 11 is integrally formed with the ring supporting portion 13, and is flat. That is, the ring holding portion 11 is angularly bent from the ring supporting portion 13 through the second bending portion 1332. The lower end edge of the ring holding portion 11 and the upper end edge of the ring supporting portion 13 are formed as the V-shaped second bending portion 1332.

Referring to FIG. 4D, with regard to the V shape of the second bending portion 1332, the linear bending portions 1333, 1334 of the second bending portion 1332 are inclined from the upper end of the first bending portion 1331 toward the upper end of the ring support 1a. To improve the bending strength and smoothly untangle the line tangle, an included angle α3 in the V shape of the second bending portion 1332 (i.e., an included angle between the linear bending portions 1333, 1334) may be 110 degrees to 120 degrees. That is, the respective upper end edges of the right half portion 131 and the left half portion 132 of the ring supporting portion 13 are inclined in the width direction WD from the center of the ring support 1a toward the upper end of the ring support 1a. The flat ring holding portion 11 is connected to the respective upper end edges of the right half portion 131 and the left half portion 132 via the second bending portion 1332. As such, the ring support 1a is provided with the Y-shaped bending portion that is formed by the first bending portion 1331 and the second bending portion 1332.

Therefore, although the external force F1 is applied to the ring support 1a, the ring support 1a can strongly resist against being deformed, bent or twisted in a direction in which the right half portion 131 and the left half portion 132 of the ring supporting portion 13 are opened or closed. Further, since the ring support 1a strongly resists the external force F1 due to the Y-shaped bending portion, the ring support 1a has an improved rotation prevention strength. Accordingly, the ring supporting portion 13 is prevented from expanding the coupling opening 181 of the attachment portion 1b, being rotated about the attachment portion 1b while climbing over the coupling opening 181 of the attachment portion 1b, or being separated from the coupling portion 18 of the attachment portion 1b.

An external force F2 *(see* FIG. 4A) may be applied to the ring support 1a in the frontward direction TD toward the tip of the fishing rod or in the rearward direction BD toward the butt of the fishing rod. For example, the external force F2 may be applied to the ring support 1a due to a fishing line during fishing or due to an external impact. However, the ring support 1a has an improved bending strength that resists the external force F2. Due to the Y-shaped bending portion of the ring support 1a, the ring holding portion 11 is prevented from being deformed or bent in a direction of the external force F2, or the right half portion 131 and the left half portion 132 of the ring supporting portion 13 are prevented from being opened or bent in the direction of the external force F2. As such, the ring support 1a has an improved bending strength that resists the external force F2.

In the above-described embodiment, the ring support 1a, which is composed of the metallic thin plate, and the attachment portion 1b, which is composed of the hardened resin material, are integrally coupled to each other through the insert injection molding. Specifically, the ring support 1a and the attachment portion 1b are integrally coupled to each other through the injection molding in such a manner that the lower portion of the ring supporting portion 13 is embedded in the coupling portion 18 of the large outer diameter portion 16a. Therefore, the ring support 1a is not provided with a connection part such as an attachment ring (not shown) that is fitted with the attachment portion 1b. Accordingly, when compared with a fishing line guide of a prior art which is configured such that the frame with the attachment ring formed therein is coupled to the attachment portion, the fishing line guide of one embodiment has a remarkably low weight and can achieve the weight reduction.

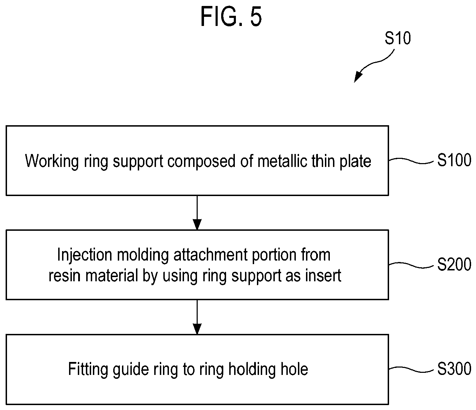

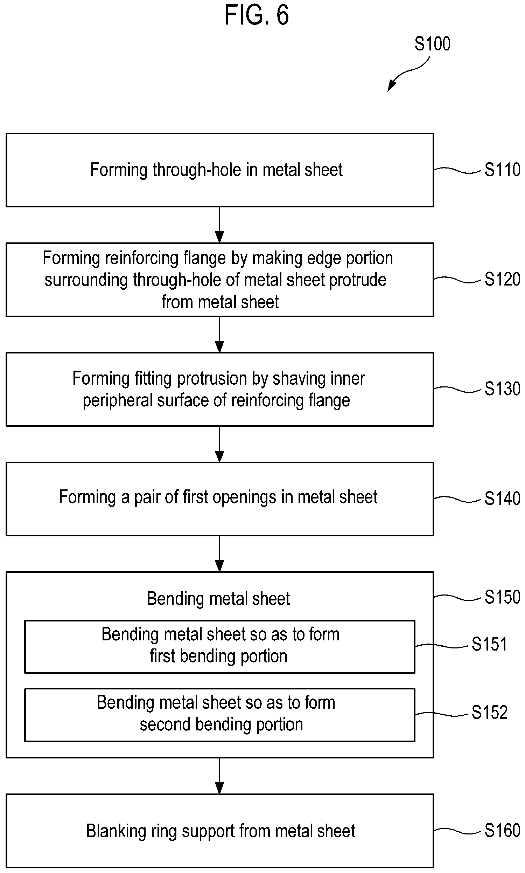

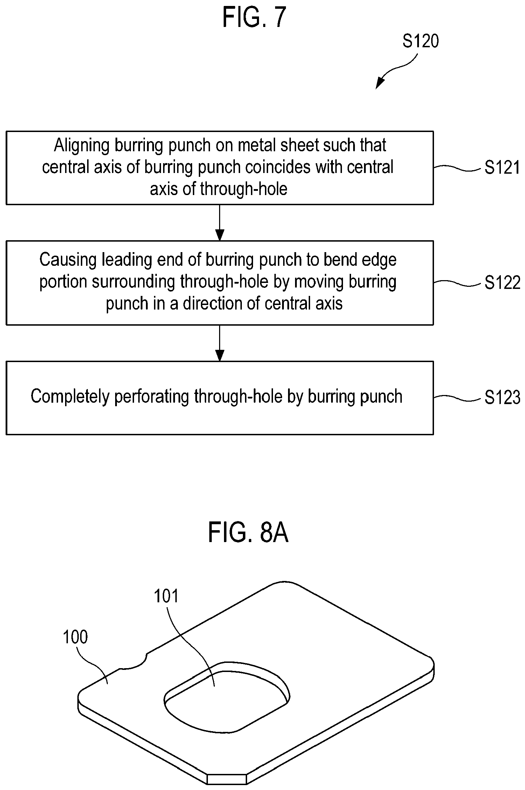

FIG. 5 is a flowchart showing a method S10 of manufacturing a fishing line guide according to an embodiment of the present disclosure. FIG. 6 is a flowchart showing a step S100 of working a ring support in the method S10 of manufacturing the fishing line guide shown in FIG. 5. FIG. 7 is a flowchart showing a step S120 of forming a reinforcing flange in the method of manufacturing the fishing line guide shown in FIG. 6. FIGS. 8A to 8F illustrate a process of manufacturing a ring support according to an embodiment of the present disclosure.

The method S10 of manufacturing a fishing line guide is a method of manufacturing the above-described fishing line guide 1 according to an embodiment of the present disclosure. The method S10 of manufacturing a fishing line guide may include: a step S100 of working a ring support composed of a metallic thin plate; a step S200 of injection molding an attachment portion from a resin material by using the ring support as an insert; and a step S300 of fitting a guide ring to a ring holding hole.

The resin material composing the attachment portion may be carbon long fiber reinforced resin. The carbon long fiber reinforced resin material has an impact strength that is 3 to 5 times higher than that of a carbon short fiber reinforced resin material. The carbon long fiber reinforced resin material has a high rigidity due to a high fiber-mixed amount, and has an excellent creep property at high temperature. The carbon long fiber reinforced resin material has a high elasticity retention rate at high temperature, and has an excellent impact retention rate at low temperature. The carbon long fiber reinforced resin material has a high dimensional stability due to a small bending deformation, a small tensile deformation and a low linear expansion coefficient, and has an excellent wear resistance.

An example of the carbon long fiber reinforced resin material may have a tensile strength of 270MpA, a bending strength of 340MPA, a bending elastic modulus of 17000MpA, a Charpy notched impact strength of 22KJ/m², a deflection temperature under load of 178°C, and a density of 1.16g/cm³. An example of the carbon long fiber may have a length of about 7mm and a cylindrical shape. The content of carbon in the carbon long fiber reinforced resin material may be about 30%. The resin in the carbon long fiber reinforced resin material may be nylon resin.

Referring to FIG. 6, the step S100 of working the ring support may include: a step S110 of forming a through-hole, to which a guide ring is coupled, in a metal sheet; a step S120 of forming a reinforcing flange by making an edge portion surrounding the through hole of the metal sheet protrude from the metal sheet; a step S130 of forming a plurality of fitting protrusions by shaving an inner peripheral surface of the reinforcing flange; a step S140 of forming a pair of first openings in the metal sheet; a step S150 of bending the metal sheet such that at least one bending portion is formed in the metal sheet; and a step S160 of blanking the ring support from the metal sheet.

Referring to FIGS. 6 and 8A, in the step S110, the metal sheet 100 of a rectangular flat plate is prepared, and the through hole 101 is formed in the metal sheet 100. The metal sheet 100 may be composed of a metallic material such as stainless steel, stainless alloy, titanium alloy, or pure titanium. For example, the metal sheet 100 is composed of a metallic material of pure titanium. Forming the through-hole 101 may be performed through punching or drilling. The through-hole 101 may become the ring holding hole shown in FIG. 2A after the steps S120 and S130 are performed.

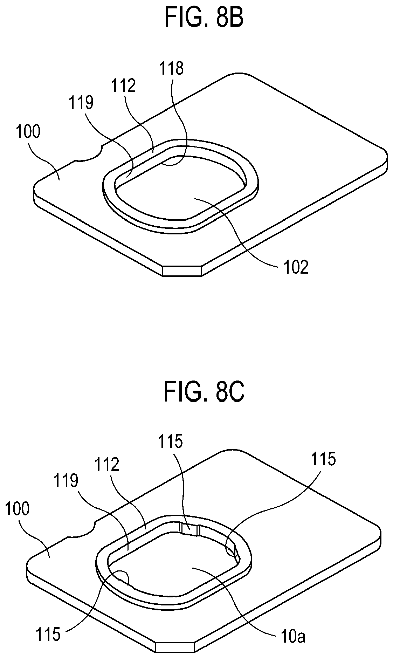

Referring to FIGS. 6 and 8B, in the step S120, the reinforcing flange 112, with which the guide ring is fitted at the inner peripheral surface 119 of the reinforcing flange, may be formed by making an edge portion surrounding the through-hole of the metal sheet 100 protrude from the metal sheet 100. Further, through this step, an expanded hole 102, the size of which is further expanded than of the through-hole 101 shown in FIG. 8A, may be formed.

By the step S120, the reinforcing flange 112, which has the inner peripheral surface 119 and the guide surface 118 and defines the ring holding hole by the inner peripheral surface 119, may be formed in the ring support 1a. The reinforcing flange 112 may protrude perpendicularly from the metal sheet 100. The guide ring shown in FIG. 2A may be fitted to the inner peripheral surface of the reinforcing flange 112.

Forming the reinforcing flange 112 may be performed through burring process, for example, by making the whole edge portion of the through-hole 101 protrude by means of a burring punch such that the whole edge portion of the through-hole 210 is directed toward the tip of the fishing rod. Referring to FIG. 7, the step S120 may include: a step S121 of aligning the burring punch on the metal sheet such that a central axis of the burring punch coincides with a central axis of the through-hole; a step S122 of causing a leading end of the burring punch to bend the edge portion surrounding the through-hole 101 by moving the burring punch in the direction of the central axis; and a step S123 of completely perforating the through-hole 101 by the burring punch.

Referring to FIGS. 6 and 8C, in the step S130, a plurality of fitting protrusions 115 in contact with the outer peripheral surface of the guide ring may be formed in the inner peripheral surface 119 of the reinforcing flange 112. Forming the fitting protrusions 115 may be performed through shaving process. For example, the fitting protrusions 115 may be formed by cutting the inner peripheral surface 119 through shaving process such that the fitting protrusions 115 remain. Through the step S130, the ring support may be provided with the structure holding the guide ring by fitting at three locations.

Further, in the step S130, the thickness of the reinforcing flange 112 may be adjusted through shaving process. After the through-hole is perforated by the burring punch, the reinforcing flange 112 may have a thickness that is larger than a required thickness, and a leading end of the reinforcing flange 112 may have a rough shape. Through the step S130, the thickness of the reinforcing flange 112 may be adjusted to a required size by cutting such a leading end having a rough shape. Further, through shaving process, the shape of the ring holding hole 10a shown in FIG. 8C may be finished from the expanded hole 102 shown in FIG. 8B.

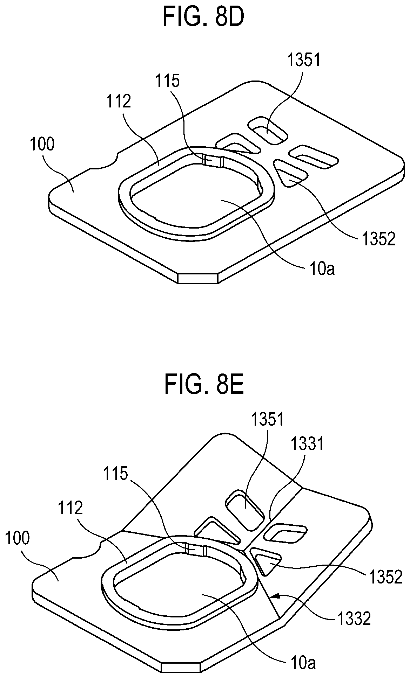

Referring to FIGS. 6 and 8D, in the step S140, before the step S150 of bending the metal sheet, a pair of first openings 1351 may be formed in the metal sheet. The first openings 1351 may be filled with a resin material by the step S200 of injection molding the attachment portion of FIG. 5. Further, in the course of performing the step S140, a pair of second openings 1352 may be formed in the metal sheet.

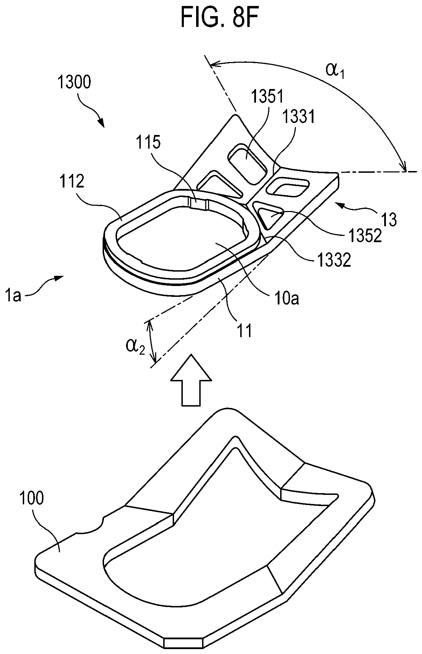

Forming the first openings 1351 and the second openings 1352 may be performed through punching or drilling. As shown in FIG. 8E, if the first bending portion 1331 is formed in the metal sheet 100, the first bending portion 1331 passes between the pair of first openings 1351 and the pair of second openings 1352. The first openings 1351 and the second openings 1352 are located symmetrically with respect to the first bending portion 1331. As shown in FIG. 8F, in the ring support 1a blanked from the metal sheet 100, the first openings 1351 and the second openings 1352 are located in the ring supporting portion 13 of the ring support 1a.

Referring to FIGS. 6 and 8E, the step S150 may include: a step S151 of bending the metal sheet so as to form the first bending portion which extends to the lower end of the ring supporting portion in the downward direction toward the tubular rod; and a step S152 of bending the metal sheet so as to form the second bending portion which is a boundary between the ring holding portion and the ring supporting portion and is convex toward the lower end of the ring support. With regard to the step S150 of bending the metal sheet, the first bending portion 1331 and the second bending portion 1332 may be simultaneously formed in the metal sheet 100. As another example, the first bending portion 1331 may be formed in the metal sheet 100 prior to the second bending portion 1332, or the second bending portion 1332 may be formed in the metal sheet 100 prior to the first bending portion 1331.

In the step S150, the metal sheet 100 is bent such that the first bending portion 1331 and the second bending portion 1332 are formed in the metal sheet 100 by press working the metal sheet 100 by using a press die. Forming the first and second bending portions 1331, 1332 and bending the metal sheet 100 are performed by using a press die that is capable of forming the first bending portion 1331 and the second bending portion 1332 in the metal sheet 100. Referring to FIG. 8F, by bending the metal sheet by using the press die, the first and second bending portions 1331, 1332 are formed in the metal sheet 100, and at the same time, portions of the metal sheet 100, which are located along the first bending portion 1331 and the second bending portion 1332, are bent at the aforementioned first bending angle α1 and the aforementioned second bending angle α2. The first bending portion 1331 is located adjacent to the ring holding hole 10a, and extends to the lower end of the metal sheet 100. The second bending portion 1332 is convex toward the lower end of the metal sheet 100, and is connected to the first bending portion 1331. The second bending portion 1332 extends from one lateral end of the metal sheet 100 to an opposite lateral end of the metal sheet 100.

Referring to FIGS. 6 and 8F, in the step S160, the ring support 1a is formed from the metal sheet 100 which is formed with the first and second bending portions 1331, 1332 and is bent by the first and second bending portions. Forming the ring support 1a from the metal sheet 100 may be performed through blanking using a press die. The ring support 1a obtained from the metal sheet 100 is formed as a metallic thin plate that has the ring holding portion 11 holding the guide ring, and the ring supporting portion 13 integrally formed with the ring holding portion 11. Further, in the ring support 1a, the ring supporting portion 13 is bent at the first bending angle α1 with reference to the first bending portion 1331 which extends from the vicinity of the ring holding hole 10a to the lower end of the ring supporting portion 13. Further, in the ring support 1a, the ring holding portion 11 is bent at the second bending angle α2 with respect to the ring supporting portion 13 with reference to the second bending portion 1332 which extends from one lateral end of the ring support 1a to an opposite lateral end of the ring support 1a and is convex toward the lower end of the ring support 1a. The second bending portion 1332 becomes a boundary between the ring holding portion 11 and the ring supporting portion 13, and is connected to the first bending portion 1331 at a middle thereof.

Referring to FIG. 5, in the step S200, the attachment portion 1b is injection molded from the carbon long fiber reinforced resin by using the ring support 1a as an insert. When the ring support 1a is used as an insert for injection molding, a lower portion of the ring support 1a is inserted to a molding cavity for injection molding the attachment portion. Therefore, the attachment portion 1100 is injection molded as the lower portion of the ring supporting portion 13 including a lower portion of the first bending portion 1331 is embedded in the attachment portion 1b. Further, the ring supporting portion 13 of the ring support 1a and the attachment portion 1b are partially coupled to each other.

The method of manufacturing a fishing line guide of an embodiment may include, after the step S200, a step S300 of fitting the guide ring to the ring holding hole. Referring to FIG. 3, by fitting the guide ring 12 to the ring holding hole 10a, the fishing line guide 1, which has the guide ring 12 for guiding a fishing line and is attached to the tubular rod of a fishing rod, may be manufactured.

Although process steps, method steps, algorithms, and the like are described in a sequential order in the flowcharts shown in FIGS. 5 to 7, the processes, the methods, and the algorithms may be configured to operate in any suitable order. In other words, it is not necessary to perform the steps of the processes, the methods, and algorithms described in various embodiments of the present disclosure in the order described in the present disclosure. Further, although it is described that some steps are performed non-simultaneously, the some steps may be performed simultaneously in another embodiment. Further, the examples of the processes according to the depiction in the drawings do not mean that the exemplified processes exclude other changes and corrections for the examples, do not mean that any one of the exemplified processes or their steps is essential in one or more of the various embodiments of the present disclosure, and do not mean that the exemplified processes are preferable.

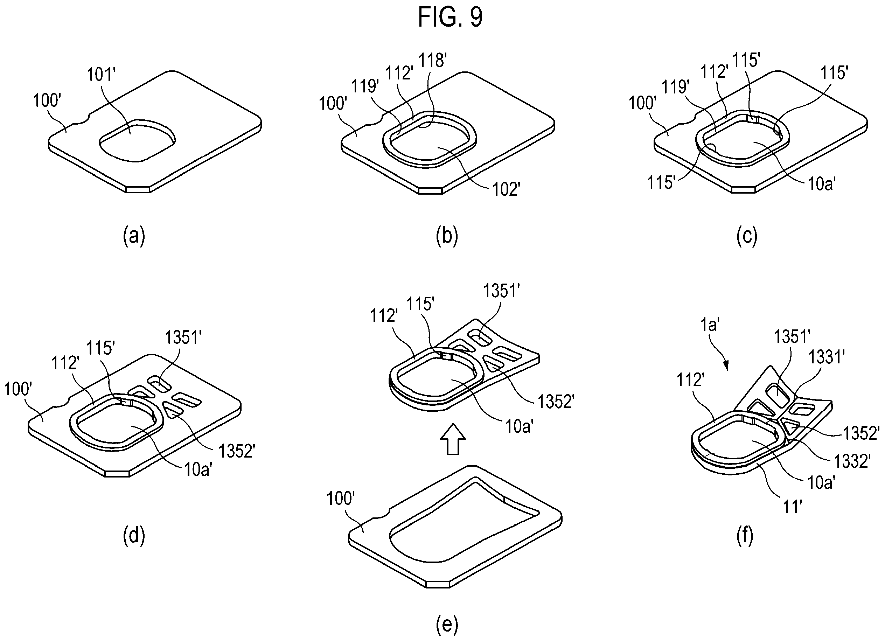

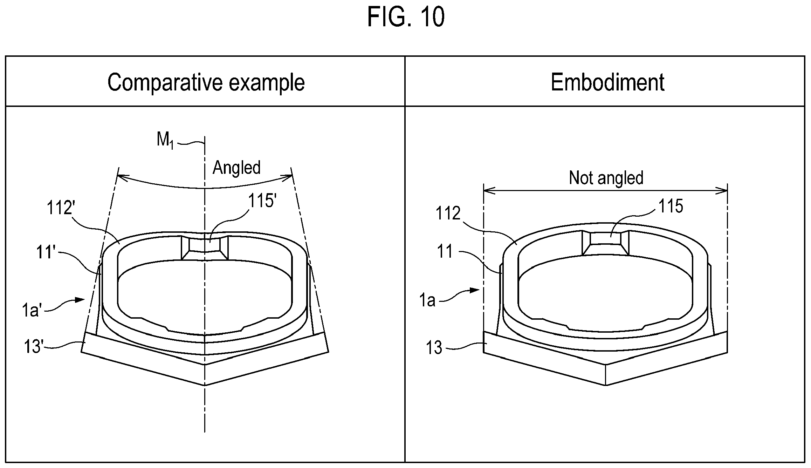

FIG. 9 illustrates a process of manufacturing a ring support 1a' according to a comparative example. FIG. 10 illustrates the ring support 1a according to an embodiment of the present disclosure and the ring support 1a' according to the comparative example.

The ring support 1a' according to the comparative example may be manufactured through the following processes. Referring to FIG. 9(a), a through-hole 101' is formed in a metal sheet 100'. Next, referring to FIG. 9(b), a reinforcing flange 112' is formed through the burring process. Next, referring to FIG. 9(c), fitting protrusions 115' are formed through shaving process. Next, referring to FIG. 9(d), first openings 1351' and second openings 1352' are formed in the metal sheet 100'.

In the subsequent steps, there are differences between the method S10 of manufacturing a ring support according to an embodiment of the present disclosure and the comparative example. According to an embodiment of the present disclosure, the bending process of bending the metal sheet is performed prior to the blanking process. However, according to the comparative example, the blanking process is performed prior to the bending process. Referring to FIG. 9(e), a ring support preform having a flat shape is blanked from the metal sheet 100'. Next, referring to FIG. 9(f), the ring support 1a' is manufactured by forming first and second bending portions 1331' and 1332' in the ring support preform.

Referring to FIG. 10, when the ring support 1'a is manufactured like the comparative example, a bending phenomenon may occur in the ring holding portion 11'. Accordingly, like an embodiment of the present disclosure, it is necessary to perform the bending process in the state where both a portion to become the ring support and the remaining portion of the metal sheet 100 are integrally formed, and to perform the blanking process thereafter.

If the blanking process is performed first and then the bending process is performed like the comparative example, the whole shape of the ring support 1a' including the ring holding portion 11' is bent in a V-shape and thus has an angle in the thickness direction. Such a V-shape causes the unbalance of shape in the thickness direction, thereby deteriorating a dimensional stability. That is, since the blanking process is performed prior to the bending process in the manufacturing process in the ring support 1a' according to the comparative example, the ring holding portion 11' and the reinforcing flange 112' included in the ring holding portion 11' may be bent together. Therefore, the ring holding portion 11' and the reinforcing flange 112' fail to maintain a flat state and may be bent along a central line M1. Thus, if the bending process is performed after the blanking process, the dimensional change of the ring holding portion 11' may be large.

In contrast with the comparative example, if the bending process is performed first and the blanking process is performed thereafter like an embodiment of the present disclosure, an approximately flat plate-like portion of the metal sheet 100 remains, and thus a ring support having the minimized unbalance in the thickness direction can be manufactured. That is, the blanking process is performed after performing the bending process in the manufacturing process of the ring support. Thus, when the ring supporting portion is bent in a V shape so as to form the first bending portion during the bending process, the flat plate-like portion of the metal sheet 100 can be pressed so as not to be bent together, and the ring holding portion and the reinforcing flange included in the ring holding portion are not bent together. Therefore, the dimensional change can be minimized. Accordingly, since the ring holding portion and the reinforcing flange may be formed as a flat plate, the reinforcing flange may have a flat inner peripheral surface notwithstanding performing the blanking process after the bending process, and the dimensional change of the ring supporting portion can become smaller.

Further, when the attachment portion is injection molded by using the ring support as an insert according to an embodiment of the present disclosure, a gap between a molding die and the ring support may occur depending on the precision of the ring support put into the molding die. For example, in such a structure as the comparative example, the ring holding portion has a bent shape. Thus, a gap is likely to occur between the molding die and the ring support, and therefore a defect such as leakage of the resin may be caused by the gap. Accordingly, to alleviate or prevent the occurrence of the gap, the method of manufacturing a ring support according to the embodiment may be employed instead of the method of manufacturing a ring support according to the comparative example shown in FIG. 9.

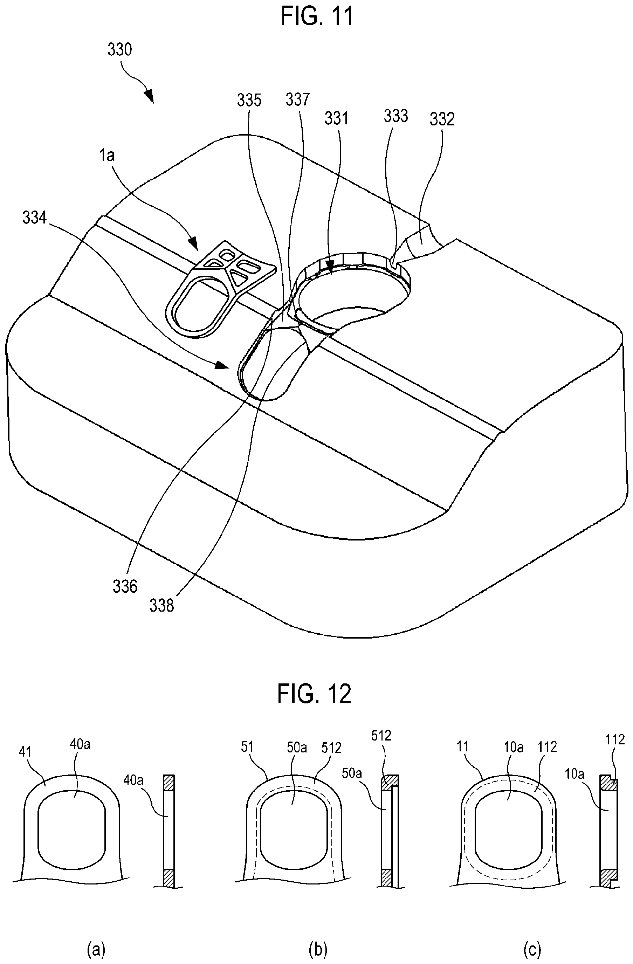

FIG. 11 is a perspective view showing a portion of a molding die which is used in a process of manufacturing a fishing line guide according to an embodiment of the present disclosure. The descriptions below are made with reference to the reference symbols shown in FIGS. 4A to 4D.

To injection mold the attachment portion, the ring support 1a is seated on and fixed to an insert seat 334 of a molding die 330. The insert seat 334 is formed to extend from a molding cavity 331 such that the lower portion of the ring support 1a is inserted into the molding cavity 331. Said lower portion of the ring support 1a inserted into the molding cavity 331 is the lower portion of the ring supporting portion 13 which includes the lower portion of the first bending portion 1331 and the first openings 1351. As another embodiment, said lower portion of the ring support 1a inserted into the molding cavity 331 may be the lower portion of the ring supporting portion 13 which includes the lower portion of the first bending portion 1331.

The insert seat 334 communicates with the molding cavity 331, and is concave from a top surface of the molding die 330. The insert seat 334 is formed such that the ring support 1a bent by the first bending portion 1331 and the second bending portion 1332 is seated on the insert seat. The insert seat 334 has a bottom wall 335 and a side wall 336. The bottom wall 335 is formed so as to come into close contact with the front end surface of the ring support 1a, except a portion of the ring support that is located within the area of the molding cavity 331. The side wall 336 is formed so as to come into close contact with the lateral surface of the ring support 1a. A protruding portion 337, which corresponds to the shape of the first bending portion 1331 of the ring support 1a, and a protruding portion 338, which corresponds to the shape of the second bending portion 1332 of the ring support 1a, may be formed in the bottom wall 335. Further, a boss, which can be inserted into the second opening 1352 of the ring support 1a, may be formed in the bottom wall 335. The bottom wall 335 and the side wall 336 of the insert seat 334 may be formed so as to fix the ring support 1a according to the embodiments of the present disclosure.

A horizontal injection passage 332 communicating with the molding cavity 331 is formed in the molding die 330. Agate 333 is formed at an end of the horizontal injection passage 332. The gate communicates with the molding cavity 331, and the resin material enters the molding cavity 331 through the gate. The resin material may be supplied through the horizontal injection passage 332 in the state where the ring support 1a is seated on the insert seat 334, and may form the attachment portion.

FIG. 12 illustrates a method of forming a reinforcing flange according to a comparative example and a method of forming a reinforcing flange according to an embodiment of the present disclosure.

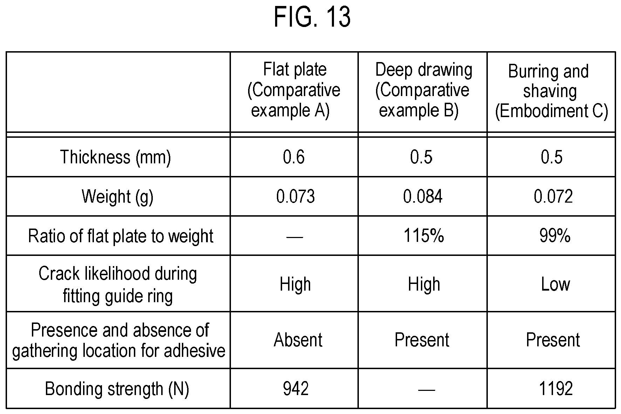

Referring to FIG. 12(a), comparative example A of FIG. 13 (a comparative example for a flat plate) is a ring holding portion 41 in which a ring holding hole 40a for insertion of a guide ring is formed in a flat metal sheet, and additional working for reinforcing thickness is not provided. Referring to FIG. 12(b), comparative example B of FIG. 13 (a comparative example for deep drawing) is a ring holding portion 51, in which a through-hole for insertion of a guide ring is first formed in a flat metal sheet and thereafter a reinforcing flange 512 is formed by performing a deep drawing process on an edge portion surrounding the through-hole. A ring holding hole 50a is formed in the ring holding portion 51. The deep drawing process means a process of pressing the edge portion surrounding the through-hole by a deep drawing rod and expanding the edge portion in a direction perpendicular to the metal sheet, and the deep drawing rod does not completely pass through the flat plate. Referring to FIG. 12(c), embodiment C of FIG. 13 according to the present disclosure (an embodiment for burring and shaving process) is the ring holding portion 11, in which a through-hole for insertion of a guide ring is first formed in a flat plate and thereafter the reinforcing flange 112 is formed by performing a burring and shaving process on an edge portion surrounding the through-hole. The ring holding hole 10a is formed in the ring holding portion 11.

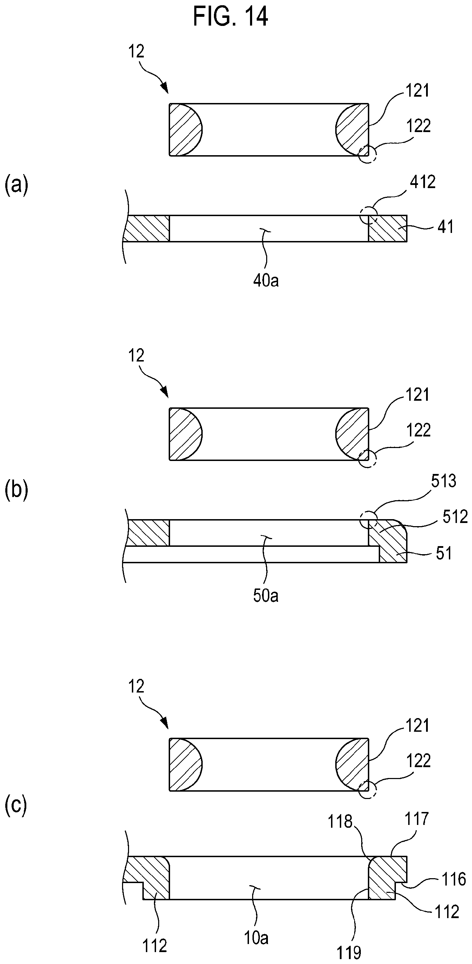

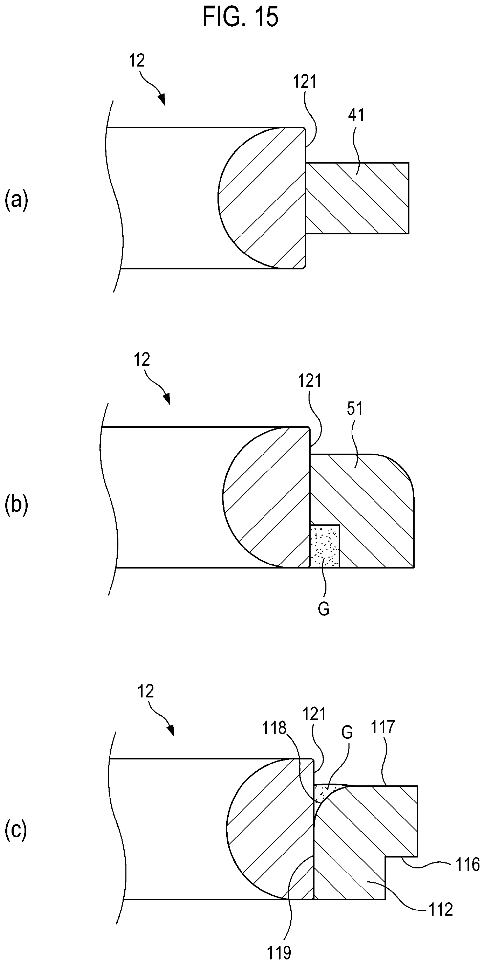

FIG. 13 is a table for comparing the ring holding portions according to comparative example A and comparative example B, and the ring holding portion according to embodiment C of the present disclosure. FIG. 14 illustrates a process of inserting a guide ring into the ring holding portions according to comparative example A and comparative example B, and a process of inserting a guide ring into the ring holding portion according to embodiment C of the present disclosure. FIG. 15 illustrates the state where a guide ring is inserted to the ring holding portions according to comparative example A and comparative example B, and the state where a guide ring is inserted to the ring holding portion according to embodiment C of the present disclosure. FIGS. 14(a) and 15(a) show comparative example A, FIGS. 14(b) and 15(b) show comparative example B, and FIGS. 14(c) and 15(c) show embodiment C.

Referring to the first row of FIG. 13, the thicknesses (mm) of a metal sheet for manufacturing a ring support are described. The comparative example for a flat plate (comparative example A) has a thickness thicker than those of the comparative example for deep drawing (comparative example B) and the embodiment for burring and shaving process (embodiment C). Further, referring to the second row of FIG. 13, the weights (g) of the manufactured ring support are described, and the weight in the comparative example for deep drawing (comparative example B) is largest. Therefore, referring to the third row of FIG. 13, the ratio of flat plate to weight in the comparative example for deep drawing (comparative example B) is largest. Therefore, it can be identified that the comparative example for deep drawing (comparative example B) has the heaviest weight in order to secure the required strength of a ring support.

The comparative examples and the embodiment can be compared for the crack likelihood during fitting a guide ring with reference to the fourth row of FIG. 13 and FIG. 14. In comparative example A, an edge 122 of the guide ring 12 and an edge 412 of the ring holding portion 41 are in contact with each other as the guide ring 12 is fitted to the ring holding hole 40a. Thus, it is relatively highly likely that the guide ring 12 composed of a ceramic material cracks. Similarly, in comparative example B, the edge 122 of the guide ring 12 and an edge 513 of the reinforcing flange 512 are in contact with each other as the guide ring 12 is fitted to the ring holding hole 50a. Thus, it is relatively highly likely that the guide ring 12 cracks. In contrast with comparative examples A and B, in embodiment C, the guide ring 12 is fitted to the ring holding hole 10a as the guide ring is moved from the rear end surface 117 to the front end surface 116. Thus, the guide ring 12 is in contact with the guide surface 118 that is formed in the process of manufacturing the reinforcing flange 112 (i.e., the burring process). Accordingly, it is relatively unlikely that the guide ring 12 of embodiment C cracks.

Presence and absence of gathering location for the adhesive can be compared with reference to the fifth row of FIG. 13 and FIG. 15. Since comparative example A does not have a gathering location for the adhesive, it has a low bonding strength between the guide ring 12 and the ring holding portion 41. In contrast, in comparative example B, an adhesive G may be applied between the inner peripheral surface of the ring holding portion 51 and the outer peripheral surface of the guide ring 12. Therefore, since a space where the adhesive can gather is provided, a bonding strength between the frame and the guide ring is stronger than that of comparative example A. Further, in embodiment C, the outer peripheral surface 121 of the guide ring 12 is in contact with the inner peripheral surface 119 of the reinforcing flange 112, and the adhesive G may be applied to a space between the guide surface 118 and the outer peripheral surface 121 of the guide ring 12. Therefore, the space where the adhesive can gather is provided, the bonding strength between the frame and the guide ring is stronger than that of comparative example A. Specifically, referring to the sixth row of FIG. 13, the bonding strength between the guide ring 12 and the ring holding portion in embodiment C can be improved by approximately 26.5% when compared with the bonding strength of comparative example A.

A deep drawing method such as comparative example B may be used as a method of improving an attachment strength between the guide ring and the frame, but it increases a weight in comparison with a flat plate. Further, when comparing a folded edge in the deep drawing process according to the comparative example with a folded edge around the ring holding hole in the burring process according to the embodiment, the volume of the folded edge in the burring process becomes smaller, and thus the weight reduction of the frame can be achieved.

According to the above-described embodiments, to decrease defects of the insert injection molding, it is necessary to constitute the ring supporting portion of the ring support by a flat surface rather than with a curved surface. In the deep drawing method, the ring holding portion as well as the ring supporting portion may be composed of a curved surface. In the burring method according to the embodiment, the ring holding portion may be composed of a curved surface, but the ring supporting portion may be composed of a flat surface. Further, since the space where an adhesive can be applied may be provided between the guide surface of the ring holding portion and the outer peripheral surface of the guide ring, the rate of defectives in an assembly process (fitting process) between the guide ring and the ring holding portion can be reduced.

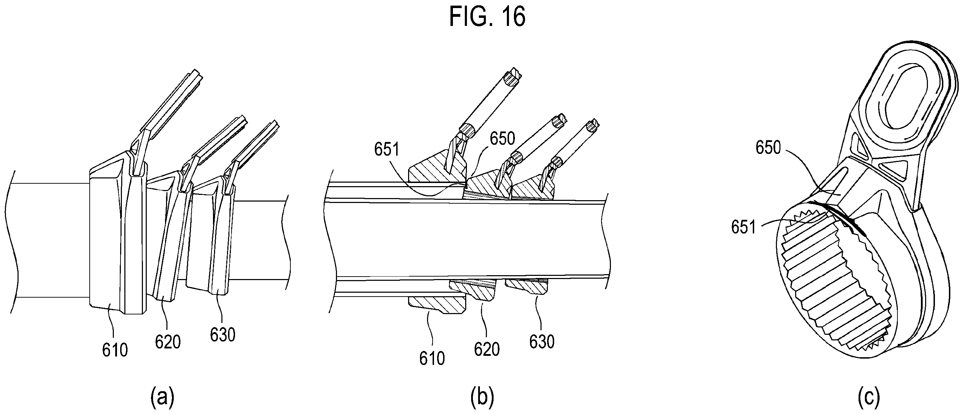

FIG. 16 illustrates a fishing line guide according to a comparative example. FIG. 16(a) illustrates the state where attachment portions 610, 620, 630 having different sizes according to the comparative example gather when a fishing rod is contracted. FIG. 16(b) is a sectional view of FIG. 16(a) and shows the state where an upper rib 650 of the attachment portion 620 bites into the attachment portion 610 and is damaged thereby. FIG. 16(c) shows the state where a bite damage occurs on the upper rib 650.

Referring to FIG. 16(a), in the attachment portion 620 which is adjacent to the attachment portion 610 and has a size smaller than that of the attachment portion 610, a rear end of the attachment portion 620 is inserted into a bore formed in the attachment portion 610. Referring to FIG. 16(b), the rear end of the attachment portion 620 is inclined and is inserted into the bore formed in the attachment portion 610. According to the comparative example, as the fishing line guide is slid along the tubular rod, the upper rib 650 presses an upper edge of the adjacent attachment portion and therefore a bite damage 651 may occur. Referring to FIG. 16(c), only one upper rib 650 is provided at an upper end of the attachment portion in the fishing line guide according to the comparative example, and the upper rib 650 has the bite damage 651 along the upper edge of the adjacent attachment portion. The attachment portion 610 and the attachment portion 620 cannot be easily separated from each other in the circumstance shown in FIGS. 16(a) and 16(b). Thus, it may be inconvenient to use the fishing rod, and the aforementioned bite damage 651 of the upper rib 650 may cause the attachment portion to crack.

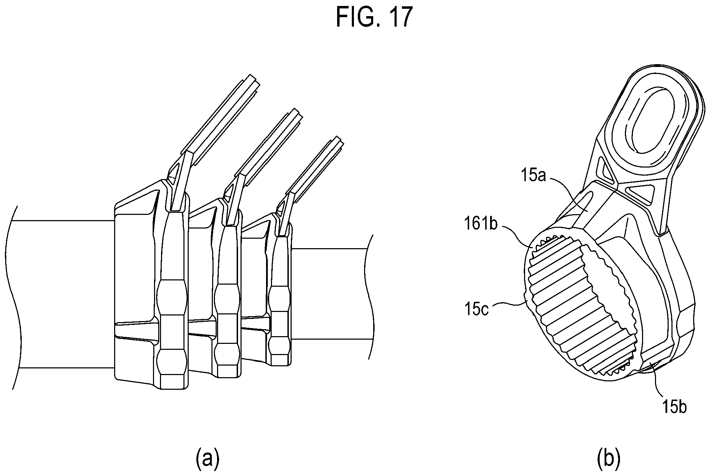

FIG. 17 illustrates a fishing line guide including an attachment portion provided with a plurality of ribs according to an embodiment of the present disclosure.

Referring to FIG. 17(b), the upper rib 15a and the pair of lateral ribs 15b, 15c may be disposed so as to make an approximately triangular shape along the outer peripheral surface of the attachment portion. Further, the upper rib 15a and the pair of lateral ribs 15b, 15c may be formed to extend to the rear end surface 161b of the attachment portion in the direction of the central axis such that the rear end surfaces of the upper rib 15a and the pair of lateral ribs 15b, 15c are included in the rear end surface 161b of the attachment portion.

Referring to FIG. 17(a), when the fishing line guide having a larger-sized attachment portion and the fishing line guide having a smaller-sized attachment portion approach each other such that the front end surface of the larger-sized attachment portion and the rear end surface of the smaller-sized attachment portion adjoin each other, an embodiment of the present disclosure may be configured such that the rear end surface of the upper rib of the smaller-sized attachment portion and the rear end surfaces of the pair of lateral ribs of the smaller-sized attachment portion come into contact with the front end surface of the larger-sized attachment portion. Accordingly, the rear end of the attachment portion of the smaller-sized fishing line guide can be prevented from biting into the bore of the larger-sized attachment portion.

### DESCRIPTION OF REFERENCE SYMBOLS

1 fishing line guide, 1a ring support, 1b attachment portion, 10a ring holding hole, 11 ring holding portion, 12 guide ring, 112 reinforcing flange, 13 ring supporting portion, 1331 first bending portion, 1332 second bending portion, 15a upper rib, 15b, 15c lateral rib

## Claims

1. A method of manufacturing a fishing line guide (1) which has a guide ring (12) for guiding a fishing line and is attachable to a tubular rod (1120, 1130, 1140, 1150) of a fishing rod (1000), the method comprising:
working a ring support (1a) composed of a metallic thin plate, the ring support including: a ring holding portion (11) holding the guide ring (12); and a ring supporting portion (13) integrally formed with the ring holding portion, wherein a through-hole (101) is formed in the ring holding portion (11) as a ring holding hole (10a) such that a reinforcing flange (112) in contact with an outer peripheral surface of the guide ring (12) is formed; and
injection molding an attachment portion (1b) having an annular shape, which has an inner peripheral surface to be fitted with an outer peripheral surface of the tubular rod (1120, 1130, 1140, 1150), from a resin material by using the ring support (1a) as an insert such that a lower portion of the ring supporting portion (13) is embedded in the attachment portion (1b),
wherein the working the ring support (1a) comprises:
forming the through-hole (101) in a metal sheet (100);
after the forming the through-hole, forming the reinforcing flange (112), with which the guide ring (12) is fitted at an inner peripheral surface (119) of the reinforcing flange, by making an edge portion surrounding the through-hole of the metal sheet protrude from the metal sheet;
bending the metal sheet such that at least one bending portion (1331, 1332) is formed in the metal sheet; and
blanking the ring support (1a) from the metal sheet.

2. The method of claim 1, wherein the forming the reinforcing flange (112) comprises:
aligning a burring punch on the metal sheet (100) such that a central axis of the burring punch coincides with a central axis of the through-hole (101);
causing a leading end of the burring punch to bend the edge portion surrounding the through-hole by moving the burring punch in a direction of the central axis; and
completely perforating the through-hole by the burring punch.

3. The method of claim 1, wherein the bending the metal sheet (100) comprises:
bending the metal sheet (100) so as to form a first bending portion (1331) which extends to a lower end of the ring supporting portion (13) in a downward direction toward the tubular rod (1120, 1130, 1140, 1150) when the fishing line guide is attached to the fishing rod; and
bending the metal sheet (100) so as to form a second bending portion (1332) which is a boundary between the ring holding portion (11) and the ring supporting portion (13) and is convex toward a lower end of the ring support (1a).

4. The method of claim 1, wherein the working the ring support (1a) comprises, before the bending the metal sheet (100), forming a pair of first openings (1351) in the metal sheet, the pair of the first openings being formed to be perforated through the ring supporting portion (13), and
wherein the first openings (1351) are filled with the resin material through the injection molding the attachment portion (1b).

5. The method of claim 1, wherein the working the ring support (1a) further comprises, after the forming the reinforcing flange (112), forming a plurality of fitting protrusions (115) in contact with an outer peripheral surface of the guide ring (12) by shaving the inner peripheral surface (119) of the reinforcing flange (112).

6. A fishing line guide which is attachable to a tubular rod (1120, 1130, 1140, 1150) of a fishing rod (1000) for guiding a fishing line, the fishing line guide comprising:
an attachment portion (1b) having an annular shape composed of a hardened resin material and having an inner peripheral surface to be fitted with an outer peripheral surface of the tubular rod (1120, 1130, 1140, 1150);
a guide ring (12) through which the fishing line can pass; and
a ring support (1a) composed of a metallic thin plate and comprising: a ring holding portion (11) having a ring holding hole (10a) to which the guide ring is coupled; and a ring supporting portion (13) integrally formed with the ring holding portion and partially coupled to the attachment portion,
the fishing line guide being **characterized in that**:
the ring support (1a) and the attachment portion (1b) are partially coupled to each other through injection molding of the resin material formed to be the attachment portion by using the ring support (1a) as an insert such that a lower portion of the ring supporting portion (13) is embedded in the attachment portion;
the attachment portion (1b) includes:
an upper rib (15a) located at an upper end of the attachment portion and protruding in a radially outward direction; and
a pair of lateral ribs (15b, 15c) located below a center of the attachment portion and protruding in the radially outward direction;
the ring supporting portion (13) is bent at a predetermined bending angle (α1, α2) with reference to a bending portion (1331, 1332) extending in one direction in the ring supporting portion;
the ring holding portion (11) includes a reinforcing flange (112) that protrudes along an axial direction of the ring holding hole (10a) so as to form the ring holding hole and is in contact with an outer peripheral surface of the guide ring (12);
the reinforcing flange (112) includes:
an inner peripheral surface (119); and
a guide surface (118) having a curved shape extending from the inner peripheral surface and configured to guide the outer peripheral surface of the guide ring (12) such that the outer peripheral surface of the guide ring is in contact with the inner peripheral surface; and
an adhesive (G) applied to a predetermined space between the guide surface (118) of the reinforcing flange (112) and the outer peripheral surface of the guide ring along a circumferential direction of the guide ring (12).

7. The fishing line guide of claim 6, wherein a plurality of fitting protrusions (115) in contact with the outer peripheral surface of the guide ring (12) are formed in the inner peripheral surface (119) of the reinforcing flange (112).

8. The fishing line guide of claim 6, wherein the upper rib (15a) and the pair of lateral ribs (15b, 15c) extend to a rear end surface (161b) of the attachment portion (1b) in a rearward direction toward a butt of the fishing rod (1000), when the fishing line guide is attached to the fishing rod, and
wherein the rear end surface (161b) of the attachment portion (1b) includes a rear end surface of the upper rib (15a) and rear end surfaces of the pair of lateral ribs (15b, 15c).

9. The fishing line guide of claim 6, wherein the rear end surface of the upper rib (15a) and the rear end surfaces of the pair of lateral ribs (15b, 15c) are contactable with a front end surface of an attachment portion of another fishing line guide attached to the tubular rod (1120, 1130, 1140, 1150) when the fishing line guide is attached to the fishing rod.

10. A fishing rod comprising:
a plurality of tubular rods (1110, 1120, 1130, 1140, 1150);
and
the fishing line guide (1) of any one of claims 6 to 9, which is attached to one of the tubular rods.

## Patentansprüche

1. Verfahren zum Herstellen einer Angelschnurführung (1), die einen Führungsring (12) zum Führen einer Angelschnur aufweist und an einer rohrförmigen Rute (1120, 1130, 1140, 1150) einer Angelrute (1000) befestigt werden kann, wobei das Verfahren Folgendes umfasst:
Bearbeiten eines Ringträgers (1a), der aus einer metallischen dünnen Platte besteht, wobei der Ringträger Folgendes beinhaltet: einen Ringhalteabschnitt (11), der den Führungsring (12) hält; und einen Ringtrageabschnitt (13), der mit dem Ringhalteabschnitt einstückig ausgebildet ist, wobei ein Durchgangsloch (101) in dem Ringhalteabschnitt (11) als ein Ringhalteloch (10a) derart ausgebildet ist, dass ein Verstärkungsflansch (112) in Berührung mit einer äußeren Umfangsoberfläche des Führungsrings (12) ausgebildet ist; und
Spritzgießen eines Befestigungsabschnitts (1b), der eine Ringform aufweist, der eine innere Umfangsoberfläche aufweist, um an einer äußeren Umfangsoberfläche der rohrförmigen Rute (1120, 1130, 1140, 1150) montiert zu sein, aus einem Harzmaterial durch derartiges Verwenden des Ringträgers (1a) als ein Einsatz, dass ein unterer Abschnitt des Ringtrageabschnitts (13) in den Befestigungsabschnitt (1b) eingebettet ist,
wobei das Bearbeiten des Ringträgers (1a) Folgendes umfasst:
Ausbilden des Durchgangslochs (101) in einem Metallblech (100);
nach dem Ausbilden des Durchgangslochs, Ausbilden des Verstärkungsflansches (112), mit dem der Führungsring (12) an einer inneren Umfangsoberfläche (119) des Verstärkungsflansches montiert ist, durch Veranlassen, dass ein Kantenabschnitt, der das Durchgangsloch des Metallblechs umgibt, aus dem Metallblech herausragt;
derartiges Biegen des Metallblechs, dass wenigstens ein Biegeabschnitt (1331, 1332) in dem Metallblech ausgebildet ist; und
Stanzen des Ringträgers (1a) aus dem Metallblech.

2. Verfahren nach Anspruch 1, wobei das Ausbilden des Verstärkungsflansches (112) Folgendes umfasst:
derartiges Ausrichten eines Entgratstempels auf dem Metallblech (100), dass eine Mittelachse des Entgratstempels mit einer Mittelachse des Durchgangslochs (101) zusammenfällt;
Bewirken, dass ein vorderes Ende des Entgratstempels den Kantenabschnitt, der das Durchgangsloch umgibt, durch Bewegen des Entgratstempels in einer Richtung der Mittelachse biegt; und
vollständiges Perforieren des Durchgangslochs durch den Entgratstempel.

3. Verfahren nach Anspruch 1, wobei das Biegen des Metallblechs (100) Folgendes umfasst:
Biegen des Metallblechs (100), um einen ersten Biegeabschnitt (1331) auszubilden, der sich zu einem unteren Ende des Ringtrageabschnitts (13) nach unten in Richtung der rohrförmigen Rute (1120, 1130, 1140, 1150) erstreckt, wenn die Angelschnurführung an der Angelrute befestigt ist; und
Biegen des Metallblechs (100), um einen zweiten Biegeabschnitt (1332) auszubilden, der eine Grenze zwischen dem Ringhalteabschnitt (11) und dem Ringtrageabschnitt (13) ist und zu einem unteren Ende des Ringträgers (1a) konvex ist.

4. Verfahren nach Anspruch 1, wobei das Bearbeiten des Ringträgers (1a) vor dem Biegen des Metallblechs (100) das Ausbilden eines Paars erster Öffnungen (1351) in dem Metallblech umfasst, wobei das Paar der ersten Öffnungen ausgebildet wird, um durch den Ringtrageabschnitt (13) perforiert zu sein, und
wobei die ersten Öffnungen (1351) durch das Spritzgießen des Befestigungsabschnitts (1b) mit dem Harzmaterial gefüllt sind.

5. Verfahren nach Anspruch 1, wobei das Bearbeiten des Ringträgers (1a) nach dem Ausbilden des Verstärkungsflansches (112) ferner das Ausbilden mehrerer Passvorsprünge (115) in Berührung mit einer äußeren Umfangsoberfläche des Führungsrings (12) durch Reduzieren der inneren Umfangsoberfläche (119) des Verstärkungsflansches (112) umfasst.

6. Angelschnurführung, die an einer rohrförmigen Rute (1120, 1130, 1140, 1150) einer Angelrute (1000) zum Führen einer Angelschnur befestigt werden kann, wobei die Angelschnurführung Folgendes umfasst:
einen Befestigungsabschnitt (1b), der eine Ringform aufweist, die aus einem gehärteten Harzmaterial besteht, und eine innere Umfangsoberfläche aufweist, die an einer äußeren Umfangsoberfläche der rohrförmigen Rute (1120, 1130, 1140, 1150) montiert ist;
einen Führungsring (12), durch den die Angelschnur passieren kann; und
einen Ringträger (1a), der aus einer dünnen Metallplatte besteht und Folgendes umfasst: einen Ringhalteabschnitt (11), der ein Ringhalteloch (10a) aufweist, mit dem der Führungsring gekoppelt ist; und einen Ringtrageabschnitt (13), der mit dem Ringhalteabschnitt einstückig ausgebildet und teilweise mit dem Befestigungsabschnitt gekoppelt ist,
wobei die Angelschnurführung **dadurch gekennzeichnet ist, dass**:
der Ringträger (1a) und der Befestigungsabschnitt (1b) teilweise durch Spritzgießen des Harzmaterials aneinander gekoppelt sind, das ausgebildet ist, um der Befestigungsabschnitt zu sein, durch derartiges Verwenden des Ringträgers (1a) als ein Einsatz, dass ein unterer Abschnitt des Ringtrageabschnitts (13) in den Befestigungsabschnitt eingebettet ist;
wobei der Befestigungsabschnitt (1b) Folgendes beinhaltet:
eine obere Rippe (15a), die sich an einem oberen Ende des Befestigungsabschnitts befindet und in einer radialen Richtung nach außen vorsteht; und
ein Paar seitlicher Rippen (15b, 15c), die sich unterhalb einer Mitte des Befestigungsabschnitts befinden und in der radialen Richtung nach außen vorstehen;
der Ringtrageabschnitt (13) mit einem zuvor bestimmten Biegewinkel (α1, α2) unter Bezugnahme auf einen Biegeabschnitt (1331, 1332) gebogen wird, der sich in eine Richtung in den Ringtrageabschnitt erstreckt;
der Ringhalteabschnitt (11) einen Verstärkungsflansch (112) beinhaltet, der entlang einer axialen Richtung des Ringhaltelochs (10a) vorsteht, um das Ringhalteloch auszubilden, und in Berührung mit einer äußeren Umfangsoberfläche des Führungsrings (12) steht;
wobei der Verstärkungsflansch (112) Folgendes beinhaltet:
eine innere Umfangsoberfläche (119); und
eine Führungsoberfläche (118), die eine gekrümmte Form aufweist, die sich aus der inneren Umfangsoberfläche erstreckt und konfiguriert ist, um die äußere Umfangsoberfläche des Führungsrings (12) derart zu führen, dass die äußere Umfangsoberfläche des Führungsrings in Berührung mit der inneren Umfangsoberfläche steht; und
einen Klebstoff (G), der auf einen zuvor bestimmten Raum zwischen der Führungsoberfläche (118) des Verstärkungsflansches (112) und der äußeren Umfangsoberfläche des Führungsrings entlang einer Umfangsrichtung des Führungsrings (12) aufgetragen wird.

7. Angelschnurführung nach Anspruch 6, wobei mehrere Passvorsprünge (115) in Berührung mit der äußeren Umfangsoberfläche des Führungsrings (12) in der inneren Umfangsoberfläche (119) des Verstärkungsflansches (112) ausgebildet sind.

8. Angelschnurführung nach Anspruch 6, wobei sich die obere Rippe (15a) und das Paar seitlicher Rippen (15b, 15c) zu einer hinteren Endoberfläche (161b) des Befestigungsabschnitts (1b) in einer Rückwärtsrichtung zu einem hinteren Teil der Angelrute (1000) erstrecken, wenn die Angelschnurführung an der Angelrute befestigt ist, und
wobei die hintere Endoberfläche (161b) des Befestigungsabschnitts (1b) eine hintere Endoberfläche der oberen Rippe (15a) und hintere Endoberflächen des Paars seitlicher Rippen (15b, 15c) beinhaltet.

9. Angelschnurführung nach Anspruch 6, wobei die hintere Endoberfläche der oberen Rippe (15a) und die hinteren Endoberflächen des Paars seitlicher Rippen (15b, 15c) mit einer vorderen Endoberfläche eines Befestigungsabschnitts einer anderen Angelschnurführung in Berührung kommen können, die an der rohrförmigen Rute (1120, 1130, 1140, 1150) befestigt ist, wenn die Angelschnurführung an der Angelrute befestigt ist.

10. Angelrute, die Folgendes umfasst:
mehrere rohrförmige Ruten (1110, 1120, 1130, 1140, 1150);
und
die Angelschnurführung (1) nach einem der Ansprüche 6 bis 9, die an einer der rohrförmigen Ruten befestigt ist.

## Revendications

1. Procédé de fabrication d'un guide-ligne de pêche (1) qui a une bague de guidage (12) pour guider une ligne de pêche et qui peut être fixé à une tige tubulaire (1120, 1130, 1140, 1150) d'une canne à pêche (1000), le procédé comprenant :
le formage d'un support de bague (1a) composé d'une plaque métallique mince, le support de bague comportant : une partie de maintien de bague (11) maintenant la bague de guidage (12) ; et une partie de support de bague (13) formée d'un seul tenant avec la partie de maintien de bague, un trou traversant (101) étant formé dans la partie de maintien de bague (11) en tant que trou de maintien de bague (10a) de telle sorte qu'une bride de renfort (112) en contact avec une surface périphérique extérieure de la bague de guidage (12) est formée ; et
le moulage par injection d'une partie de fixation (1b) ayant une forme annulaire, qui présente une surface périphérique intérieure destinée à être ajustée avec une surface périphérique extérieure de la tige tubulaire (1120, 1130, 1140, 1150), à partir d'un matériau en résine à l'aide du support de bague (1a) en tant qu'insert de telle sorte qu'une partie inférieure de la partie de support de bague (13) est encastrée dans la partie de fixation (1b),
dans lequel le formage du support de bague (1a) comprend :
la formation du trou traversant (101) dans une feuille métallique (100) ;
après la formation du trou traversant, la formation de la bride de renfort (112), avec laquelle la bague de guidage (12) est ajustée au niveau d'une surface périphérique intérieure (119) de la bride de renfort, en s'assurant qu'une partie de bord entourant le trou traversant de la feuille métallique dépasse de la feuille métallique ;
le pliage de la feuille métallique de telle sorte qu'au moins une partie de pliage (1331, 1332) est formée dans la feuille métallique ; et
le découpage du support de bague (1a) de la feuille métallique.

2. Procédé selon la revendication 1, dans lequel la formation de la bride de renfort (112) comprend :
l'alignement d'un poinçon d'ébavurage sur la feuille métallique (100) de telle sorte qu'un axe central du poinçon d'ébavurage coïncide avec un axe central du trou traversant (101) ;
le fait d'amener une extrémité avant du poinçon à plier la partie de bord entourant le trou traversant en déplaçant le poinçon d'ébavurage dans une direction de l'axe central ; et
la perforation complète du trou traversant par le poinçon d'ébavurage.

3. Procédé selon la revendication 1, dans lequel le pliage de la feuille métallique (100) comprend :
le pliage de la feuille métallique (100) de manière à former une première partie de flexion (1331) qui s'étend vers une extrémité inférieure de la partie de support de bague (13) dans une direction vers le bas vers la tige tubulaire (1120, 1130, 1140, 1150) lorsque le guide-ligne de pêche est attaché à la canne à pêche ; et
le pliage de la feuille métallique (100) de manière à former une seconde partie de flexion (1332) qui est une limite entre la partie de maintien de bague (11) et la partie de support de bague (13) et qui est convexe vers une extrémité inférieure du support de bague (1a).

4. Procédé selon la revendication 1, dans lequel le formage du support de bague (1a) comprend, avant le pliage de la feuille métallique (100), la formation d'une paire de premières ouvertures (1351) dans la feuille métallique, la paire de premières ouvertures étant formées pour être perforées à travers la partie de support de bague (13), et
dans lequel les premières ouvertures (1351) sont remplies avec le matériau de résine par l'injection permettant le moulage de la partie de fixation (1b).

5. Procédé selon la revendication 1, dans lequel le formage du support de bague (1a) comprend en outre, après la formation de la bride de renfort (112), la formation d'une pluralité de saillies d'ajustement (115) en contact avec une surface périphérique extérieure de la bague de guidage (12) en rasant la surface périphérique intérieure (119) de la bride de renfort (112).

6. Guide-ligne de pêche qui peut être fixé à une tige tubulaire (1120, 1130, 1140, 1150) d'une canne à pêche (1000) pour guider une ligne de pêche, le guide-ligne de pêche comprenant :
une partie de fixation (1b) ayant une forme annulaire composée d'un matériau en résine durcie et ayant une surface périphérique intérieure à monter avec une surface périphérique extérieure de la tige tubulaire (1120, 1130, 1140, 1150) ;
une bague de guidage (12) à travers laquelle la ligne de pêche peut passer ; et
un support de bague (1a) composé d'une plaque métallique mince et comprenant :
une partie de maintien de bague (11) ayant un trou de maintien de bague (10a) auquel la bague de guidage est accouplée ; et une partie de support de bague (13) formée d'un seul tenant avec la partie de maintien de bague et partiellement accouplée à la partie de fixation,
le guide-ligne de pêche étant **caractérisé en ce que** :
le support de bague (1a) et la partie de fixation (1b) sont partiellement accouplés l'un à l'autre par moulage par injection du matériau en résine formé pour être la partie de fixation à l'aide du support de bague (1a) en tant qu'insert de telle sorte qu'une partie inférieure du la partie de support de bague (13) est intégrée dans la partie de fixation ;
la partie de fixation (1b) comporte :
une nervure supérieure (15a) située à une extrémité supérieure de la partie de fixation et faisant saillie dans une direction radiale vers l'extérieur ; et
une paire de nervures latérales (15b, 15c) situées en dessous d'un centre de la partie de fixation et faisant saillie dans la direction radiale vers l'extérieur ;
la partie de support de bague (13) est pliée à un angle de pliage prédéterminé (α1, α2) par rapport à une partie de pliage (1331, 1332) s'étendant dans une direction dans la partie de support de bague ;
la partie de maintien de bague (11) comporte une bride de renfort (112) qui fait saillie le long d'une direction axiale du trou de maintien de bague (10a) de manière à former le trou de maintien de bague et qui est en contact avec une surface périphérique externe de la bague de guidage (12) ;
la bride de renfort (112) comporte :
une surface périphérique intérieure (119) ; et
une surface de guidage (118) ayant une forme incurvée s'étendant à partir de la surface périphérique intérieure et conçue pour guider la surface périphérique extérieure de la bague de guidage (12) de telle sorte que la surface périphérique extérieure de la bague de guidage est en contact avec la surface périphérique intérieure ; et
un adhésif (G) appliqué sur un espace prédéterminé entre la surface de guidage (118) de la bride de renfort (112) et la surface périphérique extérieure de la bague de guidage le long d'une direction circonférentielle de la bague de guidage (12).

7. Guide-ligne de pêche selon la revendication 6, dans lequel une pluralité de saillies d'ajustement (115) en contact avec la surface périphérique extérieure de la bague de guidage (12) sont formées dans la surface périphérique intérieure (119) de la bride de renfort (112).

8. Guide-ligne de pêche selon la revendication 6, dans lequel la nervure supérieure (15a) et la paire de nervures latérales (15b, 15c) s'étendent vers une surface d'extrémité arrière (161b) de la partie de fixation (1b) dans une direction vers l'arrière vers le talon de la canne à pêche (1000), lorsque le guide-ligne de pêche est fixé à la canne à pêche, et
dans lequel la surface d'extrémité arrière (161b) de la partie de fixation (1b) comporte une surface d'extrémité arrière de la nervure supérieure (15a) et les surfaces d'extrémité arrière de la paire de nervures latérales (15b, 15c).

9. Guide-ligne de pêche selon la revendication 6, dans lequel la surface d'extrémité arrière de la nervure supérieure (15a) et les surfaces d'extrémité arrière de la paire de nervures latérales (15b, 15c) peuvent être mises en contact avec une surface d'extrémité avant d'une partie de fixation d'un autre guide-ligne de pêche fixé à la tige tubulaire (1120, 1130, 1140, 1150) lorsque le guide-ligne de pêche est fixé à la canne à pêche.

10. Canne à pêche comprenant :
une pluralité de tiges tubulaires (1110, 1120, 1130, 1140, 1150) ;
et
le guide-ligne de pêche (1) selon l'une quelconque des revendications 6 à 9, qui est fixé à l'une des tiges tubulaires.
